# EUROPEAN PATENT APPLICATION

(11) **EP 3 051 154 A1**
(43) Date of publication of application: **03.08.2016**
(21) Application number: 14848711.9
(22) Date of filing: 22.09.2014
(51) Int. Cl.: F16C 25/08, A61C 1/05, F16C 19/06, F16C 35/067, F16C 35/077

(54) **BEARING UNIT FOR DENTAL AIR TURBIBE, AND DENTAL AIR TURBINE**

(30) Priority: 24.09.2013 JP 2013196875; 25.02.2014 JP 2014034542
(71) Applicant: NSK Ltd., Tokyo 141-8560 (JP)
(72) Inventor: SUZUKI Hironori, Fujisawa-shi Kanagawa 251-8501 (JP)
(74) Representative: Grünecker Patent- und Rechtsanwälte PartG mbB
(86) International application number: PCT/JP2014/075147
(87) International publication number: WO 2015/046181

(57) **Abstract**

A dental air turbine (10) includes a turbine blade (12), a rotating shaft (11) which is integrally fixed with the turbine blade (12), and a pair of rolling bearings (13, 14) which rotatably support the rotating shaft (11) with respect to a housing (15). The pair of rolling bearings (13, 14) are arranged back-to-back while fitting inner rings (23, 24) on the rotating shaft (11) such that a preload is applied thereto. Accordingly, it is possible to reduce the sizes of the rolling bearings (13, 14) and to improve the moment rigidity of the rotating shaft (11).

## Description

### Technical Field

The present invention relates to a bearing unit for a dental air turbine and a dental air turbine, and more particularly, to a bearing unit for a dental air turbine and a dental air turbine which is a form of dental handpiece and uses air as a driving source.

### Background Art

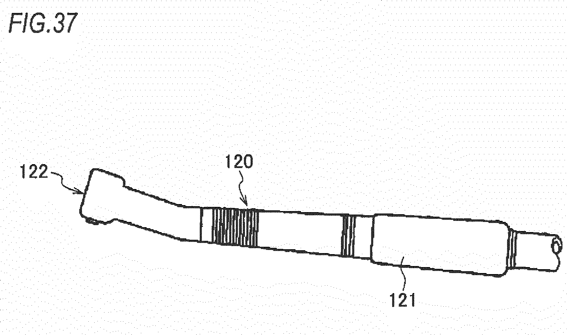

A dental air turbine handpiece 120 includes a grip part 121 and a head part 122 provided at a tip end portion of the grip part 121, as shown in FIG. 37. An operator holds the grip part 121 and performs, for example, drilling on a tooth.

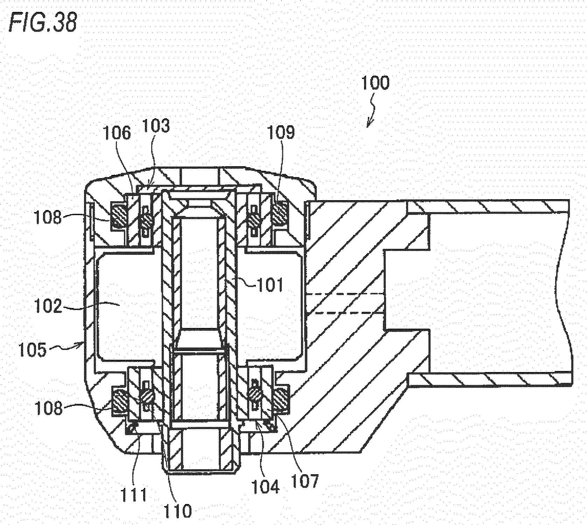

A related-art dental air turbine 100 which configures the head part 122 includes a rotating shaft 101 to which a dental treatment instrument (not shown) can be attached, a turbine blade 102 configured to rotate the rotating shaft 101 by compressed air, and a pair of ball bearings 103 and 104 which rotatably support the rotating shaft 101, as shown in FIG. 38, and these components are contained in a head housing 105. The outer rings 106 and 107 of the pair of ball bearings 103 and 104 are supported through rubber rings 108 fit in annular recesses 109 and 110 of the head housing 105. The outer ring 107 of the lower ball bearing 104 is biased upward by a spring washer 111, whereby a preload is applied to the pair of ball bearings 103 and 104. That is, the pair of ball bearings 103 and 104 which support the rotating shaft 101 are arranged face-to-face, and a constant preload is applied thereto by the elastic force of the spring washer 111 (see, for example, Patent Document 1).

As a bearing used in a dental air turbine, there is known an angular ball bearing having a counter-bore in its inner ring (see, for example, Patent Document 2). In order to improve sealing performance, the angular ball bearing has a shield plate attached to the inner ring counter side.

### Background Art Document

### Patent Document

Patent Document 1: JP-A-H 11-37162
Patent Document 2: JP-A-H08-66411

### Summary of the Invention

### Problems to be Solved

According to the dental air turbine 100 disclosed in Patent Document 1, the pair of ball bearings 103 and 104 are arranged face-to-face, and an end surface of the outer ring 107 fit in the head housing 105 by loose fitting is pressed by the spring washer 111, whereby a preload is applied. Since the distance between the acting points of the pair of ball bearings 103 and 104 arranged face-to-face is short, and a load capability against a moment load is not necessarily high, if a radial load is applied to a tip end of the rotating shaft 101 during dental treatment or the like, the rotating shaft 101 is likely to be tilted. For this reason, in order to secure a load capability against a moment load by use of the pair of ball bearings 103 and 104 arranged face-to-face, the sizes of the bearings would become larger. Even in the dental air turbine disclosed in Patent Document 2, since the pair of angular ball bearings are arranged face-to-face, similar situation would occur.

The present invention has been made in view of the above-described circumstances, and an object of the present invention is to provide a bearing unit for a dental air turbine and a dental air turbine capable of reducing a size of a rolling bearing and having high moment rigidity in a rotating shaft.

### Means for Solving the Problems

(1) A dental air turbine comprising:
   a turbine blade;
   a rotating shaft which is integrally fixed with the turbine blade and includes one end to which a dental treatment instrument can be attached; and
   a pair of rolling bearings which support the rotating shaft rotatably with respect to a housing,
   wherein the pair of rolling bearings are arranged back-to-back while fitting inner rings of the pair of rolling bearings on the rotating shaft such that a preload is applied thereto.
(2) The dental air turbine according to (1), wherein facing side surfaces of outer rings of the pair of rolling bearings come into contact with a step portion provided on the housing, and
   wherein the inner rings of the pair of rolling bearings are fit on the rotating shaft to be fixed thereto such that a fixed position preload is applied.
(3) The dental air turbine according to (1), wherein a spring member abuts on at least one of facing side surfaces of outer rings of the pair of rolling bearings and outer side surfaces of the inner rings in an axis direction such that a constant preload is applied to the pair of rolling bearings.
(4) The dental air turbine according to (3),
   wherein the spring member is disposed between each of the facing side surfaces of the outer rings of the pair of the rolling bearings and a step portion provided on the housing, and
   wherein the inner rings of the pair of rolling bearings are fit on the rotating shaft to be fixed thereto such that a constant preload is applied.
(5) The dental air turbine according to (3),
   wherein each of the facing side surfaces of the outer rings of the pair of rolling bearings comes into contact with a step portion provided on the housing, and
   wherein the inner rings of the pair of rolling bearings are fit on the rotating shaft in a state where the spring member is interposed between each of the outer side surfaces of the inner rings in the axis direction and a fixing ring fixed to the rotating shaft, such that a constant preload is applied.
(6) The dental air turbine according to (1),
   wherein each of the pair of rolling bearings is an angular ball bearing which includes an outer ring having an outer ring raceway surface formed at an inner periphery thereof, an inner ring having an inner ring raceway surface formed at an outer periphery thereof, and a plurality of balls assembled with a contact angle with the outer ring raceway surface and the inner ring raceway surface.
(7) The dental air turbine according to (6),
   wherein one of the inner periphery of the outer ring and the outer periphery of the inner ring of each of the pair of rolling bearings has a shoulder portion formed on one side with respect to the raceway surface in an axis direction, and a counter-bore formed on the other side in the axis direction,
   wherein the other of the inner periphery of the outer ring and the outer periphery of the inner ring of each of the pair of rolling bearings has a pair of shoulder portions formed on both sides with respect to the raceway surface in the axis direction, and
   wherein each of the pair of rolling bearings has a labyrinth structure between sealing means provided on the outer ring so as to face the outer periphery of the inner ring and the outer periphery of the inner ring at least on an outer side in the axis direction.
(8) The dental air turbine according to (7),
   wherein in each of the pair of rolling bearings, the sealing means is configured by a sealing portion which is formed integrally with the outer ring and extends from the shoulder portion of the outer ring toward the inner rings in a radial direction.
(9) A bearing unit for a dental air turbine, the bearing unit comprising:
   a turbine blade;
   a rotating shaft which is integrally fixed with the turbine blade and includes one end to which a dental treatment instrument can be attached; and
   a pair of rolling bearings which support the rotating shaft rotatably with respect to a housing,
   wherein the pair of rolling bearings are arranged back-to-back while disposing a space member between outer rings of the pair of rolling bearings and fitting inner rings on the rotating shaft such that a preload is applied thereto.
(10) The bearing unit for a dental air turbine according to (9),
   wherein facing side surfaces of the outer rings of the pair of rolling bearings come into contact with side surfaces of the space member in an axis direction, respectively, and
   wherein the inner rings of the pair of rolling bearings are fit on the rotating shaft to be fixed thereto such that a fixed position preload is applied.
(11) The bearing unit for a dental air turbine according to (10),
   wherein a spring member abuts on at least one of facing side surfaces of the outer rings of the pair of rolling bearings and outer side surfaces of the inner rings in an axis direction such that a constant preload is applied.
(12) The bearing unit for a dental air turbine according to (11),
   wherein the spring member is disposed between each of the facing side surfaces of the outer rings of the pair of the rolling bearings and a corresponding one of the side surfaces of the space member in the axis direction, and
   wherein the inner rings of the pair of rolling bearings are fit on the rotating shaft to be fixed thereto such that a constant preload is applied.
(13) The bearing unit for a dental air turbine according to (11),
   wherein each of the facing side surfaces of the outer rings of the pair of rolling bearings comes into contact with a corresponding one of the side surfaces of the space member in the axis direction, and
   wherein the inner rings of the pair of rolling bearings are fit on the rotating shaft in a state where the spring member is interposed between each of the outer side surfaces of the inner rings in the axis direction and a fixing ring fixed to the rotating shaft, such that a constant preload is applied.
(14) The bearing unit for a dental air turbine according to any one of (9) to (13),
   wherein an external diameter of at least one of the outer rings is larger than an external diameter of the turbine blade, and
   wherein the space member is a sleeve which is fixed to the housing and includes an air supply hole portion for supplying air to the turbine blade, an exhaust hole portion for discharging air, and a step portion which is provided on an inner side thereof in a radial direction so as to face side surfaces of the outer rings.
(15) The bearing unit for a dental air turbine according to any one of (9) to (13),
   wherein the turbine blade is disposed on an outer side of the pair of rolling bearings in an axis direction,
   wherein external diameters of the outer rings of the pair of rolling bearings are smaller than an external diameter of the turbine blade, and
   wherein the space member is a sleeve which is fixed to the housing and includes an air supply hole portion for supplying air to the turbine blade, an exhaust hole portion for discharging air, and a step portion which is provided on an inner side thereof in a radial direction so as to face side surfaces of the outer rings.
(16) The bearing unit for a dental air turbine according to any one of (9) to (13),
   wherein an external diameter of at least one of the outer rings is larger than an external diameter of the turbine blade, and
   wherein the space member is an outer ring spacer which includes an air supply hole portion for supplying air to the turbine blade and an exhaust hole portion for discharging air and which is disposed between the pair of rolling bearings.
(17) The bearing unit for a dental air turbine according to (9),
   wherein each of the pair of rolling bearings is an angular ball bearing which includes an outer ring having an outer ring raceway surface formed at an inner periphery thereof, an inner ring having an inner ring raceway surface formed at an outer periphery thereof, and a plurality of balls assembled with a contact angle with the outer ring raceway surface and the inner ring raceway surface.
(18) The bearing unit for a dental air turbine according to (17),
   wherein one of the inner periphery of the outer ring and the outer periphery of the inner ring of each of the pair of rolling bearings has a shoulder portion formed on one side with respect to the raceway surface in an axis direction, and a counter-bore formed on the other side in the axis direction,
   wherein the other of the inner periphery of the outer ring and the outer periphery of the inner ring of each of the pair of rolling bearings has a pair of shoulder portions formed on both sides with respect to the raceway surface in the axis direction, and
   wherein each of the pair of rolling bearings has a labyrinth structure between sealing means provided on the outer ring so as to face the outer periphery of the inner ring and the outer periphery of the inner ring at least on an outer side in the axis direction.
(19) The bearing unit for a dental air turbine according to (18),
   wherein in each of the pair of rolling bearings, the sealing means is configured by a sealing portion which is formed integrally with the outer ring and extends from the shoulder portion of the outer ring toward the inner rings in a radial direction.
(20) A dental air turbine comprising:
   the bearing unit according to any one of (9) to (19),
   wherein the bearing unit is fixed to the housing with an elastic member interposed therebetween, which is disposed on an outer periphery of the space member or an outer periphery of the outer rings. Advantage of the Invention

According to the dental air turbine of the present invention, since the pair of rolling bearings are arranged back-to-back while fitting the inner rings of the pair of rolling bearings on the rotating shaft such that a preload is applied thereto, if the bearings have the same sizes as those in the related art, it is possible to improve a load capability of the rotating shaft against a moment load by applying a preload to the pair of rolling bearings. Also, since it becomes possible to achieve the same moment rigidity as that achieved by the related-art bearing sizes by small-sized rolling bearings, it becomes possible to reduce the size of the turbine head while maintaining the operability and functions of the air turbine. Therefore, it is possible to accurately transmit the operating force of a dentist handling the dental air turbine to the rotating shaft, whereby the operability of the dental air turbine improves.

Also, according to the dental air turbine and the bearing unit for a dental air turbine of the present invention, since the pair of rolling bearings are arranged back-to-back while disposing the space member between the outer rings of the pair of rolling bearings and fitting the inner rings on the rotating shaft such that a preload is applied thereto, it becomes possible to achieve the same moment rigidity as that achieved by the related-art bearing sizes by small-sized rolling bearings. Therefore, it becomes possible to reduce the size of the turbine head while maintaining the operability and functions of the air turbine. Even if the bearings have the same sizes as those in the related art, it is possible to improve the load capability of the rotating shaft relative to a moment load by applying a preload to the pair of rolling bearings. Further, if the operability and functions of the air turbine are maintained with the same moment rigidity as that in the related art by bearings having the same sizes as those in the related art, since drilling performance improves, it becomes possible to reduce the rotating speed of the air turbine, and it becomes possible to reduce the amount of air required for rotation. Therefore, it is possible to reduce noise to be generated from the air turbine. Furthermore, since the rotating shaft having the turbine blade and the pair of rolling bearings are unitized while a preload is applied to the pair of rolling bearings, it is possible to easily assemble the dental air turbine in the housing, and since the bearing unit may be exchanged for exchanging the bearings, cumbersome preload adjustment work becomes not necessary.

### Brief Description of Drawings

FIG. 1 is a half cross-sectional view of a main portion of a dental air turbine according to a first embodiment of the present invention.
FIG. 2A is a half cross-sectional view of a main portion of a bearing unit for a dental air turbine according to a first modification of the first embodiment of the present invention, and FIG. 2B is a half cross-sectional view of a main portion of a bearing unit for a dental air turbine according to a second modification of the first embodiment of the present invention.
FIG. 3A is a half cross-sectional view of a main portion of a bearing unit for a dental air turbine according to a third modification of the first embodiment of the present invention, and FIG. 3B is a half cross-sectional view of a main portion of a bearing unit for a dental air turbine according to a fourth modification of the first embodiment of the present invention.
FIG. 4 is a half cross-sectional view of a main portion of a bearing unit for a dental air turbine according to a fifth modification of the first embodiment of the present invention.
FIG. 5 is a half cross-sectional view of a main portion of a dental air turbine according to a second embodiment of the present invention.
FIG. 6A is a half cross-sectional view of a main portion of a bearing unit for a dental air turbine according to a first modification of the second embodiment of the present invention, and FIG. 6B is a half cross-sectional view of a main portion of a bearing unit for a dental air turbine according to a second modification of the second embodiment of the present invention.
FIG. 7 is a half cross-sectional view of a main portion of a bearing unit for a dental air turbine according to a third embodiment of the present invention.
FIG. 8 is a half cross-sectional view of a main portion of a bearing unit for a dental air turbine according to a fourth embodiment of the present invention.
FIG. 9 is a half cross-sectional view of a main portion of a bearing unit for a dental air turbine according to a modification of the fourth embodiment of the present invention.
FIG. 10A is a half cross-sectional view of a main portion of a bearing unit for a dental air turbine according to a fifth embodiment of the present invention, and FIG. 10B is a half cross-sectional view of a main portion showing a state where the bearing unit for a dental air turbine is fit into a housing.
FIG. 11 is a schematic cross-sectional view at an axis direction position where a turbine blade of FIG. 10 is positioned.
FIG. 12 is a half cross-sectional view of a main portion of a bearing unit for a dental air turbine according to a first modification of the fifth embodiment of the present invention.
FIG. 13A is a half cross-sectional view of a main portion of a bearing unit for a dental air turbine according to a second modification of the fifth embodiment of the present invention, and FIG. 13B is a half cross-sectional view of a main portion of a bearing unit for a dental air turbine according to a third modification of the fifth embodiment of the present invention.
FIG. 14A is a half cross-sectional view of a main portion of a bearing unit for a dental air turbine according to a fourth modification of the fifth embodiment of the present invention, and FIG. 14B is a half cross-sectional view of a main portion of a bearing unit for a dental air turbine according to a fifth modification of the fifth embodiment of the present invention.
FIG. 15A is a half cross-sectional view of a main portion of a bearing unit for a dental air turbine according to a sixth modification of the fifth embodiment of the present invention, and FIG. 15B is a half cross-sectional view of a main portion of a bearing unit for a dental air turbine according to a seventh modification of the fifth embodiment of the present invention.
FIG. 16 is a half cross-sectional view of a main portion of a bearing unit for a dental air turbine according to an eighth modification of the fifth embodiment of the present invention.
FIG. 17A is a half cross-sectional view of a main portion of a bearing unit for a dental air turbine according to a ninth modification of the fifth embodiment of the present invention, and FIG. 17B is a half cross-sectional view of a main portion of a bearing unit for a dental air turbine according to a tenth modification of the fifth embodiment of the present invention.
FIG. 18A is a half cross-sectional view of a main portion of a bearing unit for a dental air turbine according to an eleventh modification of the fifth embodiment of the present invention, and FIG. 18B is a half cross-sectional view of a main portion of a bearing unit for a dental air turbine according to a twelfth modification of the fifth embodiment of the present invention.
FIG. 19 is a half cross-sectional view of a main portion of a bearing unit for a dental air turbine according to a thirteenth modification of the fifth embodiment of the present invention.
FIG. 20 is a half cross-sectional view of a main portion of a bearing unit for a dental air turbine according to a thirteenth embodiment of the present invention.
FIG. 21 is a half cross-sectional view of a main portion of a bearing unit for a dental air turbine according to a first modification of the sixth embodiment of the present invention.
FIG. 22A is a half cross-sectional view of a main portion of a bearing unit for a dental air turbine according to a second modification of the sixth embodiment of the present invention, and FIG. 22B is a half cross-sectional view of a main portion of a bearing unit for a dental air turbine according to a third modification of the sixth embodiment of the present invention.
FIG. 23 is a half cross-sectional view of a main portion of a bearing unit for a dental air turbine according to a fourth modification of the sixth embodiment of the present invention.
FIG. 24A is a half cross-sectional view of a main portion of a bearing unit for a dental air turbine according to a fifth modification of the sixth embodiment of the present invention, and FIG. 24B is a half cross-sectional view of a main portion of a bearing unit for a dental air turbine according to a sixth modification of the sixth embodiment of the present invention.
FIG. 25 is a half cross-sectional view of a main portion of a bearing unit for a dental air turbine according to a seventh modification of the sixth embodiment of the present invention.
FIG. 26A is a half cross-sectional view of a main portion of a bearing unit for a dental air turbine according to an eighth modification of the sixth embodiment of the present invention, and FIG. 26B is a half cross-sectional view of a main portion of a bearing unit for a dental air turbine according to a ninth modification of the sixth embodiment of the present invention.
FIG. 27 is a half cross-sectional view of a main portion of a bearing unit for a dental air turbine according to a tenth modification of the sixth embodiment of the present invention.
FIG. 28A is a half cross-sectional view of a main portion of a bearing unit for a dental air turbine according to an eleventh modification of the sixth embodiment of the present invention, and FIG. 28B is a half cross-sectional view of a main portion of a bearing unit for a dental air turbine according to a twelfth modification of the sixth embodiment of the present invention.
FIG. 29A is a half cross-sectional view of a main portion of a bearing unit for a dental air turbine according to a seventh embodiment of the present invention, and FIG. 29B is a half cross-sectional view of a main portion of a bearing unit for a dental air turbine according to a first modification of the seventh embodiment of the present invention.
FIG. 30A is a half cross-sectional view of a main portion of a bearing unit for a dental air turbine according to a second modification of the seventh embodiment of the present invention, and FIG. 30B is a half cross-sectional view of a main portion of a bearing unit for a dental air turbine according to a third modification of the seventh embodiment of the present invention.
FIG. 31 is a half cross-sectional view of a main portion of a bearing unit for a dental air turbine according to a fourth modification of the seventh embodiment of the present invention.
FIG. 32A is a half cross-sectional view of a main portion of a bearing unit for a dental air turbine according to an eighth embodiment of the present invention, and FIG. 32B is a half cross-sectional view of a main portion of a bearing unit for a dental air turbine according to a first modification of the eighth embodiment of the present invention.
FIG. 33A is a half cross-sectional view of a main portion of a bearing unit for a dental air turbine according to a second modification of the eighth embodiment of the present invention, and FIG. 33B is a half cross-sectional view of a main portion of a bearing unit for a dental air turbine according to a third modification of the eighth embodiment of the present invention.
FIG. 34 is a half cross-sectional view of a main portion of a bearing unit for a dental air turbine according to a fourth modification of the eighth embodiment of the present invention.
FIG. 35A is a half cross-sectional view of a main portion of a bearing unit for a dental air turbine according to a fifth modification of the eighth embodiment of the present invention, and FIG. 35B is a half cross-sectional view of a main portion of a bearing unit for a dental air turbine according to a sixth modification of the eighth embodiment of the present invention.
FIG. 36A is a half cross-sectional view of a main portion of a bearing unit for a dental air turbine according to a seventh modification of the eighth embodiment of the present invention, and FIG. 36B is a half cross-sectional view of a main portion of a bearing unit for a dental air turbine according to an eighth modification of the eighth embodiment of the present invention.
FIG. 37 is a schematic side view illustrating a general dental air turbine handpiece.
FIG. 38 is a cross-sectional view of a main portion of a related-art dental air turbine.

### Detailed Description of Embodiments

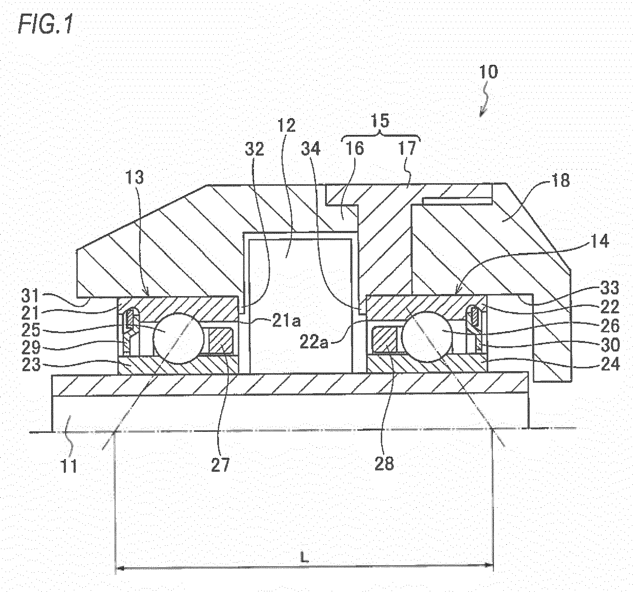

Hereinafter, a bearing unit for a dental air turbine and a dental air turbine according to each embodiment of the present invention will be described in detail while referring to the drawings. In FIGS. 1 to 36, a lower part (an instrument side) and an upper part (a counter-instrument side) of each dental air turbine are shown on a left side and a right side, respectively.

### (FIRST EMBODIMENT)

FIG. 1 is a half cross-sectional view of a main portion of a dental air turbine of the first embodiment. A dental air turbine 10 includes a rotating shaft 11 having one end to which a dental treatment instrument (not shown) can be attached, a turbine blade 12 which is fixed to a substantially center portion of the rotating shaft 11 and is configured to rotate the rotating shaft 11 by compressed air, and a lower rolling bearing (a deep groove ball bearing) 13 and an upper rolling bearing (a deep groove ball bearing) 14 which rotatably support the rotating shaft 11, and these components are contained in a housing 15. The turbine blade 12 is disposed between the lower rolling bearing 13 and the upper rolling bearing 14 and is fixed to the rotating shaft 11. The housing 15 is configured by combining a lower first housing 16 and a middle second housing 17, and a cap 18 is mounted on the second housing 17 from above. Incidentally, since FIG. 1 is a half cross-sectional view of the main portion, it does not show a connection portion side of the housing 16 extending toward a grip part of a handpiece.

The lower rolling bearing 13 includes an outer ring 21, an inner ring 23, a plurality of balls (rolling elements) 25 rollably arranged between the outer ring 21 and the inner ring 23, a crown type cage 27 which is disposed such that its annular portion is positioned on the inner side in the axis direction and holds the plurality of balls 25, and a seal member 29 disposed on the outer side of the outer ring 21 in the axis direction, and the upper rolling bearing 14 includes an outer ring 22, an inner ring 24, a plurality of balls (rolling elements) 26 rollably arranged between the outer ring 22 and the inner ring 24, a crown type cage 28 which is disposed such that its annular portion is positioned on the inner side in the axis direction and holds the plurality of balls 26, and a seal member 30 disposed on the outer side of the outer ring 22 in the axis direction.

The outer ring 21 of the lower rolling bearing 13 is fit into a bearing hole 31 of the first housing 16 by light press-fitting, bonding, or the like, and the inner side surface 21a of the outer ring 21 comes into contact with a rib (a step portion) 32 formed so as to protrude from the bearing hole 31 toward the inner side in the radial direction. In a state where a preload is applied from the axis direction (from the left direction in FIG. 1), the inner ring 23 is fixed to the rotating shaft 11 by light press-fitting, bonding, or the like.

The outer ring 22 of the upper rolling bearing 14 is fit into the second housing 17 by light press-fitting, bonding, or the like, and the facing inner side surface 22a of the outer ring 22 comes into contact with a rib (a step portion) 34 formed so as to protrude from a bearing hole 33 toward the inner side in the radial direction. In a state where a preload is applied from the axis direction (from the right direction in FIG. 1), the inner ring 24 is fixed to the rotating shaft 11 by light press-fitting, bonding, or the like.

That is, the lower rolling bearing 13 and the upper rolling bearing 14 are preloaded in a back-to-back arrangement direction by a fixed position preload manner. Since the lower rolling bearing 13 and the upper rolling bearing 14 are arranged back-to-back, even if the sizes of the bearings are the same as the related-art bearings, it is possible to lengthen the distance L between the acting points, whereby the moment rigidity of the rotating shaft 11 improves. The outer rings 21 and 22 may be fixed in the bearing holes 31 and 33 by loose fitting or through O-rings, similarly to the related art.

The housing 15, that is, the first housing 16 has an air supply passage and an exhaust passage for supplying compressed air to the turbine blade 12 or discharging the air, and the turbine blade 12 is rotated at 300,000 rpm to 500,000 rpm by the compressed air supplied from the air supply passage.

According to the dental air turbine 10 of the first embodiment configured as described above, since the inner rings 23 and 24 of the lower rolling bearing 13 and the upper rolling bearing 14 are fit on the rotating shaft 11 such that the lower rolling bearing 13 and the upper rolling bearing 14 are preloaded and arranged back-to-back, it is possible to lengthen the distance L between the acting points, and it is possible to improve the moment rigidity of the rotating shaft 11 having one end to which a dental treatment instrument can be attached.

Accordingly, even if the external diameters of the outer rings 21 and 22 are set to be smaller by about 30% as compared to related-art bearings arranged face-to-face, it is possible to secure moment rigidity having the same level as that in the related art, and it becomes possible to reduce the size of the dental air turbine 10. Further, it is possible to accurately transmit the operating force of a dentist to the rotating shaft 11, whereby the operability of the dental air turbine 10 improves.

Since the facing inner side surfaces 21a and 22a of the outer rings 21 and 22 of the lower rolling bearing 13 and the upper rolling bearing 14 are brought into contact with the ribs 32 and 34 formed on the first and second housings 16 and 17, and the inner rings 23 and 24 are fit on the rotating shaft 11 to be fixed thereto, it is possible to apply a fixed position preload to the pair of the lower rolling bearing 13 and the upper rolling bearing 14 arranged back-to-back by a simple configuration.

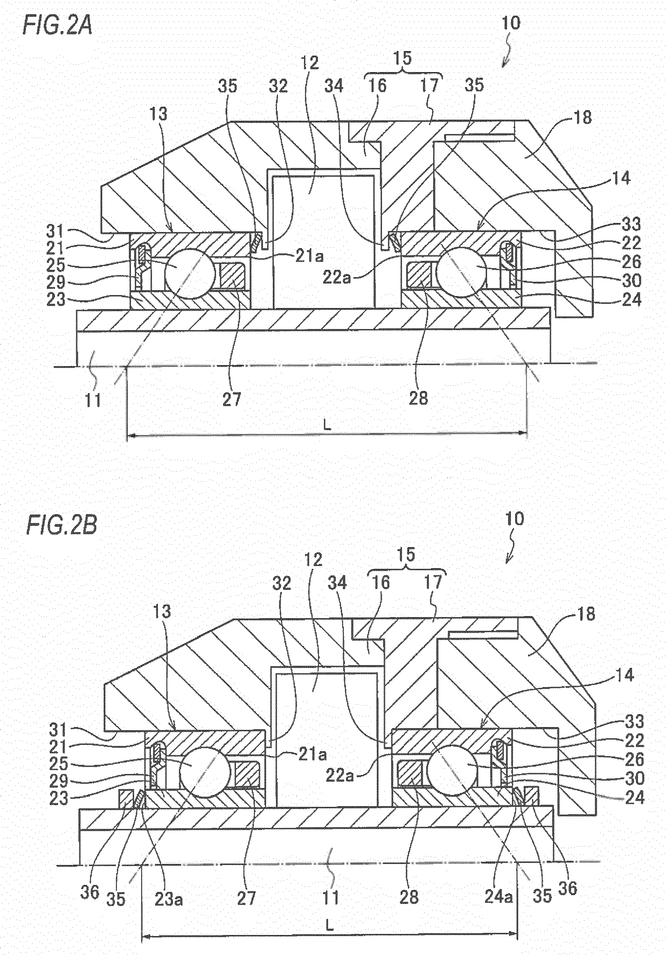

In the above-described embodiment, a case where the lower rolling bearing 13 and the upper rolling bearing 14 are arranged back-to-back, and a fixed position preload is applied thereto has been described. However, as long as the lower rolling bearing 13 and the upper rolling bearing 14 are arranged back-to-back, they may be configured as shown in FIGS. 2 to 4 such that a constant preload is applied thereto. In this case, a spring member 35 abuts on at least one of the facing inner side surfaces 21a and 22a of the outer rings 21 and 22 of the lower rolling bearing 13 and the upper rolling bearing 14 and the outer side surfaces 23a and 24a of the inner rings 23 and 24 in the axis direction.

That is, like a dental air turbine 10 of a first modification shown in FIG. 2A, the spring members 35 (leaf springs or spring washers) are disposed between the facing side surfaces of the outer rings 21 and 22 of the lower rolling bearing 13 and the upper rolling bearing 14 and the ribs 32 and 34 formed on the first and second housings 16 and 17, respectively, and the respective inner rings 23 and 24 are fit on the rotating shaft 11 to be fixed thereto. Accordingly, the lower rolling bearing 13 and the upper rolling bearing 14 are arranged back-to-back, and a constant preload is applied thereto.

Alternatively, like a dental air turbine 10 of a second modification shown in FIG. 2B, the facing side surfaces of the outer rings 21 and 22 of the lower rolling bearing 13 and the upper rolling bearing 14 come into contact with the ribs 32 and 34 formed on the housings, and the respective inner rings 23 and 24 are fit on the rotating shaft 11 while fixing the outer side surfaces 23a and 24a of the inner rings 23 and 24 in the axis direction to fixing rings 36 with the spring members 35 (leaf springs or spring washers) interposed therebetween, respectively. Even in this case, the lower rolling bearing 13 and the upper rolling bearing 14 are arranged back-to-back, and a constant preload is applied thereto.

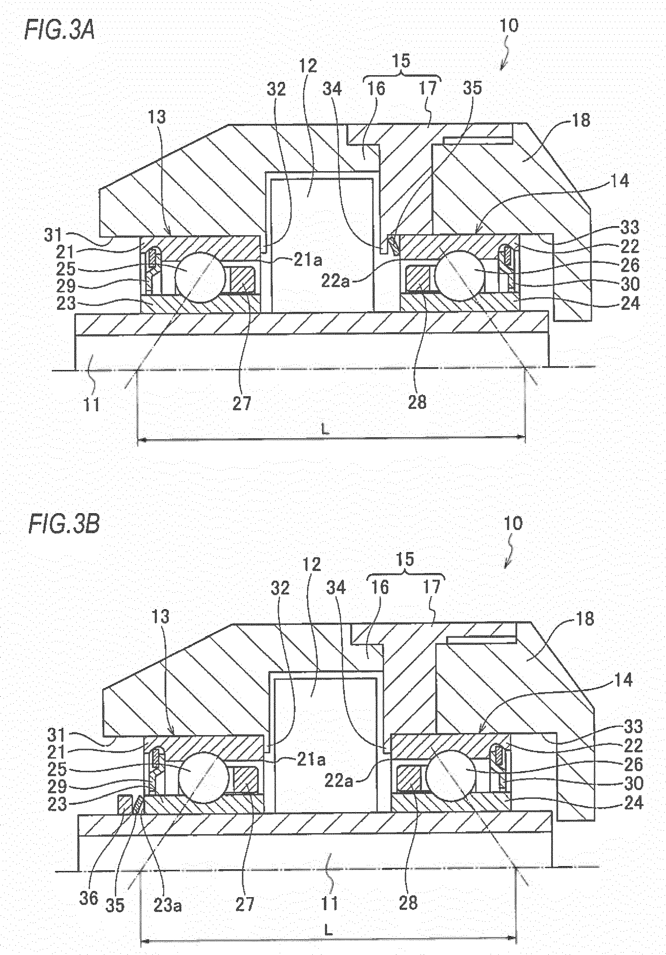

Also, like a dental air turbine 10 of a third modification shown in FIG. 3A, a spring member 35 is disposed only in any one of the gaps between the facing side surfaces of the outer rings 21 and 22 of the lower rolling bearing 13 and the upper rolling bearing 14 and the ribs 32 and 34 formed on the first and second housings 16 and 17, and the inner rings 23 and 24 are fit on the rotating shaft 11 to be fixed thereto. Even in this case, the lower rolling bearing 13 and the upper rolling bearing 14 are arranged back-to-back, and a constant preload is applied thereto.

Also, like a dental air turbine 10 of a fourth modification shown in FIG. 3B, the facing side surfaces of the outer rings 21 and 22 of the lower rolling bearing 13 and the upper rolling bearing 14 come into contact with the ribs 32 and 34 formed on the first and second housings 16 and 17, and the respective inner rings 23 and 24 are fit on the rotating shaft 11 while fixing only one of the outer side surfaces 23a and 24a of the inner rings 23 and 24 in the axis direction to a fixing ring 36 with a spring member 35 interposed therebetween and fitting the other one of the inner rings 23 and 24 on the rotating shaft 11 to be fixed thereto. Even in this case, the lower rolling bearing 13 and the upper rolling bearing 14 are arranged back-to-back, and a constant preload is applied thereto.

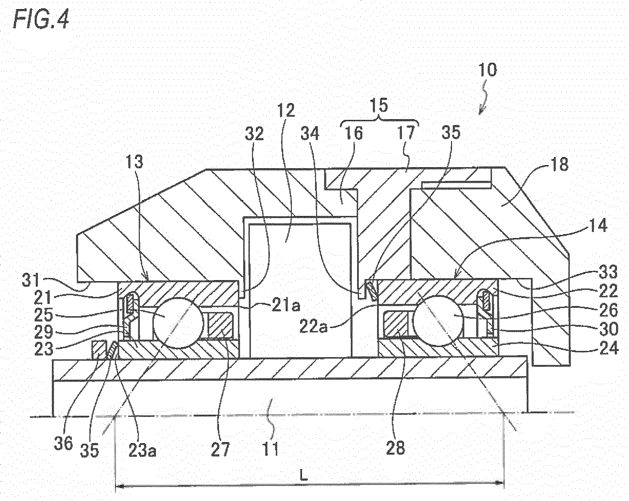

Further, like a dental air turbine 10 of a fifth modification shown in FIG. 4, a spring member 35 is disposed in any one of the gaps between the facing side surfaces of the outer rings 21 and 22 of the lower rolling bearing 13 and the upper rolling bearing 14 and the ribs 32 and 34 formed on the first and second housings 16 and 17, and the respective inner rings 23 and 24 are fit on the rotating shaft 11 while fixing only one of the outer side surfaces 23a and 24a of the inner rings 23 and 24 in the axis direction to a fixing ring 36 with a spring member 35 interposed therebetween and fitting the other one of the inner rings 23 and 24 on the rotating shaft 11 to be fixed thereto. Even in this case, the lower rolling bearing 13 and the upper rolling bearing 14 are arranged back-to-back, and a constant preload is applied thereto.

### (SECOND EMBODIMENT)

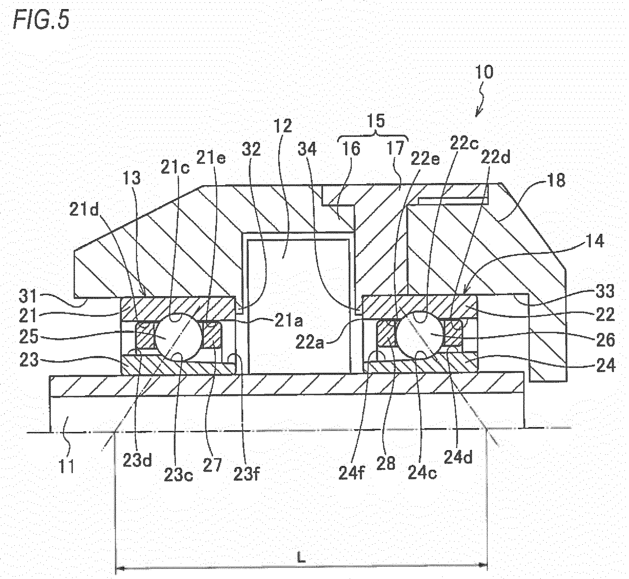

FIG. 5 is a cross-sectional view of a main portion of a dental air turbine of a second embodiment. The second embodiment is different from the first embodiment in the configurations of the lower rolling bearing 13 and the upper rolling bearing 14. Therefore, parts identical to or equivalent to those of the first embodiment are denoted by the same reference symbols, and a description thereof will not be made or will be shortly made.

In the second embodiment, the lower rolling bearing 13 is configured by an angular ball bearing including an outer ring 21 having an outer ring raceway surface 21c at an inner periphery thereof, an inner ring 23 having an inner ring raceway surface 23c at an outer periphery thereof, a plurality of balls (rolling elements) 25 assembled with a contact angle with the outer ring raceway surface 21c and the inner ring raceway surface 23c, and a machined cage 27 which holds the plurality of balls 25. The upper rolling bearing 14 is configured by an angular ball bearing including an outer ring 22 having an outer ring raceway surface 22c at an inner periphery thereof, an inner ring 24 having an inner ring raceway surface 24c at an outer periphery thereof, a plurality of balls (rolling elements) 26 assembled with a contact angle with the outer ring raceway surface 22c and the inner ring raceway surface 24c, and a machined cage 28 which holds the plurality of balls 26. In the rolling bearings 13 and 14, the diameters of the inner circumferential surfaces of the inner rings 23 and 24 are 1.5 mm to 5 mm, and the diameters of the outer circumferential surfaces of the outer rings 21 and 22 are 4 mm to 10 mm.

The outer periphery of the inner ring 23 of the lower rolling bearing 13 has a shoulder portion 23d formed on one side with respect to the inner ring raceway surface 23c in the axis direction (the outer side in the axis direction), and a counter-bore 23f formed on the other side in the axis direction (the inner side in the axis direction), and the outer periphery of the inner ring 24 of the upper rolling bearing 14 has a shoulder portion 24d formed on one side with respect to the inner ring raceway surface 24c in the axis direction (the outer side in the axis direction), and a counter-bore 24f formed on the other side in the axis direction (the inner side in the axis direction).

Meanwhile, the inner periphery of the outer ring 21 of the lower rolling bearing 13 has a pair of shoulder portions 21d and 21e formed on both sides with respect to the outer ring raceway surface 21c in the axis direction, and the inner periphery of the outer ring 22 of the upper rolling bearing 14 has a pair of shoulder portions 22d and 22e formed on both sides with respect to the outer ring raceway surface 22c in the axis direction.

The lower rolling bearing 13 and the upper rolling bearing 14 of the second embodiment have open type configurations without any sealing means to be described below, and thus can be suitably used in a dental air turbine having restrictions in space in the axis direction.

According to the dental air turbine 10 of the second embodiment configured as described above, since the lower rolling bearing 13 and the upper rolling bearing 14 are configured by angular ball bearings and are arranged back-to-back while fitting the inner rings 23 and 24 of the lower rolling bearing 13 and the upper rolling bearing 14 on the rotating shaft 11 such that a preload is applied thereto, it is possible to lengthen the distance L between the acting points, and it is possible to improve the moment rigidity of the rotating shaft 11 having one end to which a dental treatment instrument can be attached.

Accordingly, even if the external diameters of the outer rings 21 and 22 are set to be smaller by about 30% as compared to related-art bearings arranged face-to-face, it is possible to secure moment rigidity having the same level as that in the related art, and it becomes possible to reduce the size of the dental air turbine 10. Also, it is possible to accurately transmit the operating force of dentist to the rotating shaft 11, whereby the operability of the dental air turbine 10 improves.

The other configurations and effects are the same as those of the first embodiment.

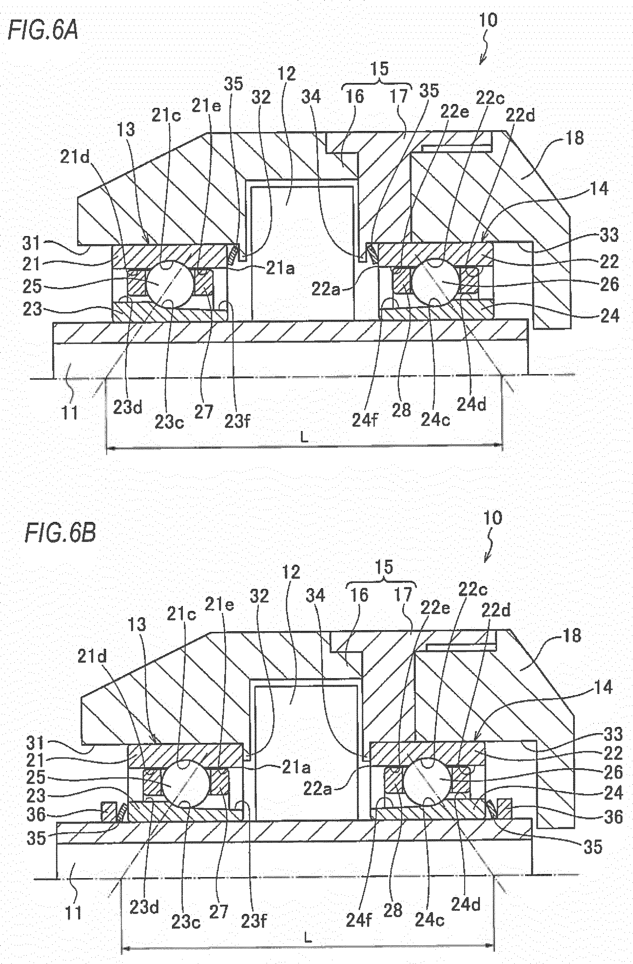

In the above-described embodiment, a case where the lower rolling bearing 13 and the upper rolling bearing 14 are arranged back-to-back and a fixed position preload is applied thereto has been described. However, as long as the lower rolling bearing 13 and the upper rolling bearing 14 are arranged back-to-back, they may be configured as shown in FIG. 6 such that a constant preload is applied thereto. In this case, a spring member 35 abuts on at least one of the facing inner side surfaces 21a and 22a of the outer rings 21 and 22 of the lower rolling bearing 13 and the upper rolling bearing 14 and the outer side surfaces 23a and 24a of the inner rings 23 and 24 in the axis direction.

That is, like a dental air turbine 10 of a first modification shown in FIG. 6A, the spring members 35 (leaf springs or spring washers) are disposed between facing side surfaces of the outer rings 21 and 22 of the lower rolling bearing 13 and the upper rolling bearing 14 and the ribs 32 and 34 formed on the first and second housings 16 and 17, respectively, and the respective inner rings 23 and 24 are fit on the rotating shaft 11 to be fixed thereto. Accordingly, the lower rolling bearing 13 and the upper rolling bearing 14 are arranged back-to-back, and a constant preload is applied thereto.

Alternatively, like a dental air turbine 10 of a second modification shown in FIG. 6B, the facing side surfaces of the outer rings 21 and 22 of the lower rolling bearing 13 and the upper rolling bearing 14 come into contact with the ribs 32 and 34 formed on the housings, and the respective inner rings 23 and 24 are fit on the rotating shaft 11 while fixing the outer side surfaces 23a and 24a of the inner rings 23 and 24 in the axis direction to fixing rings 36 with the spring members 35 (leaf springs or spring washers) interposed therebetween, respectively. Even in this case, the lower rolling bearing 13 and the upper rolling bearing 14 are arranged back-to-back, and a constant preload is applied thereto.

Also, the present invention is not limited to the dental air turbines 10 of the first and second modifications, and like the first embodiment, a spring member 35 may be disposed only in any one of the gaps between the facing side surfaces of the outer rings 21 and 22 of the lower rolling bearing 13 and the upper rolling bearing 14 and the ribs 32 and 34 formed on the first and second housings 16 and 17, and the inner rings 23 and 24 may be fit on the rotating shaft 11 to be fixed thereto.

Alternatively, the facing side surfaces of the outer rings 21 and 22 of the lower rolling bearing 13 and the upper rolling bearing 14 may come into contact with the ribs 32 and 34 formed on the first and second housings 16 and 17, and the respective inner rings 23 and 24 may be fit on the rotating shaft 11 while fixing only one of the outer side surfaces 23a and 24a of the inner rings 23 and 24 in the axis direction to a fixing ring 36 with a spring member 36 interposed therebetween and fitting the other one of the inner rings 23 and 24 on the rotating shaft 11 to be fixed thereto.

Further, a spring member 35 may be disposed in any one of the gaps between the facing side surfaces of the outer rings 21 and 22 of the lower rolling bearing 13 and the upper rolling bearing 14 and the ribs 32 and 34 formed on the first and second housings 16 and 17, and the respective inner rings 23 and 24 may be fit on the rotating shaft 11 while fixing only one of the outer side surfaces 23a and 24a of the inner rings 23 and 24 in the axis direction to a fixing ring 36 with a spring member 35 interposed therebetween and fitting the other one of the inner rings 23 and 24 on the rotating shaft 11 to be fixed thereto.

### (THIRD EMBODIMENT)

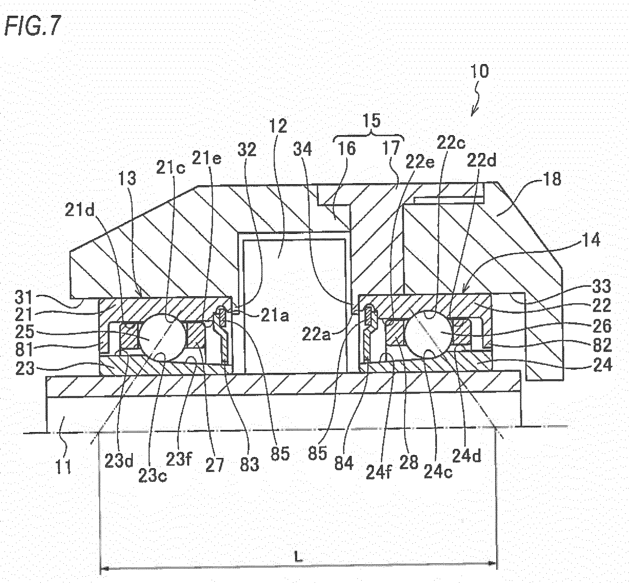

FIG. 7 is a half cross-sectional view of a main portion of a bearing unit for a dental air turbine according to a third embodiment. In a dental air turbine 10 of the third embodiment, the lower rolling bearing 13 includes sealing means 81 and 83 provided on both sides of the outer ring 21 in the axis direction so as to face the outer periphery of the inner ring 23 and has a labyrinth structure between the sealing means 81 and 83 and the outer periphery of the inner ring 23, and the upper rolling bearing 14 includes sealing means 82 and 84 provided on both sides of the outer ring 22 in the axis direction so as to face the outer periphery of the inner ring 24 and has a labyrinth structure between the sealing means 82 and 84 and the outer periphery of the inner ring 24.

Specifically, the sealing means 81, 82, 83, and 84 include sealing portions 81 and 82 formed integrally with the outer rings 21 and 22 on the outer sides in the axis direction so as to extend from the shoulder portions 21d and 22d of the outer rings 21 and 22 toward the inner rings 23 and 24 on the inner sides in the radial directions, respectively, and sealing members 83 and 84 disposed in seal grooves formed in the shoulder portions 21e and 22e of the outer rings 21 and 22 on the inner sides in the axis direction by use of retaining rings 85, respectively.

It is preferable to set the thicknesses of the sealing portions 81 and 82 and the sealing members 83 and 84 in the axis direction to 0.1 mm or greater. If they are set to 0.1 mm or greater, since passages through foreign substances needs to pass in order to enter the bearings lengthen, it is difficult for foreign substances to enter the bearings. Also, the upper limit values of the thicknesses of the sealing portions 81 and 82 and the sealing members 83 and 84 in the axis direction are set in view of the axial gap of the bearings, so as not to interfere with the balls and the cages.

It is preferable to set the radial gaps of the labyrinth structures, that is, the radial gaps between the tip ends of the sealing portions 81 and 82 and the sealing members 83 and 84 and the outer peripheries of the inner rings 23 and 24 to 0.1 mm or less. If the radial gaps become 0.1 mm or less, it becomes difficult for foreign substances to enter the bearings from the outside, and it is more preferable to set the radial gaps to 0.05 mm to 0.1 mm. Meanwhile, in the related-art structure, if the radial gaps become 0.05 mm or less, there is a possibility that the sealing portions 81 and 82 and the sealing members 83 and 84 might come into contact with the outer peripheries of the inner rings 23 and 24.

However, in the structure according to the third embodiment, since the moment rigidity becomes high, tilting of the bearings is suppressed, and it becomes possible to set the radial gaps between the outer peripheries of the inner rings 23 and 24 and the sealing portions 81 and 82 and the sealing members 83 and 84 to 0.05 mm or less.

The inner circumferential surfaces of the tip ends of the sealing portions 81 and 82 and the sealing members 83 and 84 and the outer circumferential surfaces of the shoulder portions 23d and 24d of the inner rings 23 and 24 are polished, whereby it is possible to keep a non-contact state with high accuracy.

In the third embodiment, labyrinth structures may be provided only on the outer sides in the axis direction by the sealing portions 81 and 82 provided on the outer sides in the axis direction and the outer peripheries of the inner rings 23 and 24, without providing the sealing members 83 and 84 provided on the inner sides in the axis direction.

The sealing members 83 and 84 provided on the inner sides in the axis direction and the sealing portions 81 and 82 provided on the outer sides in the axis direction may be inversely configured.

The other configurations and effects are the same as those of the second embodiment.

### (FOURTH EMBODIMENT)

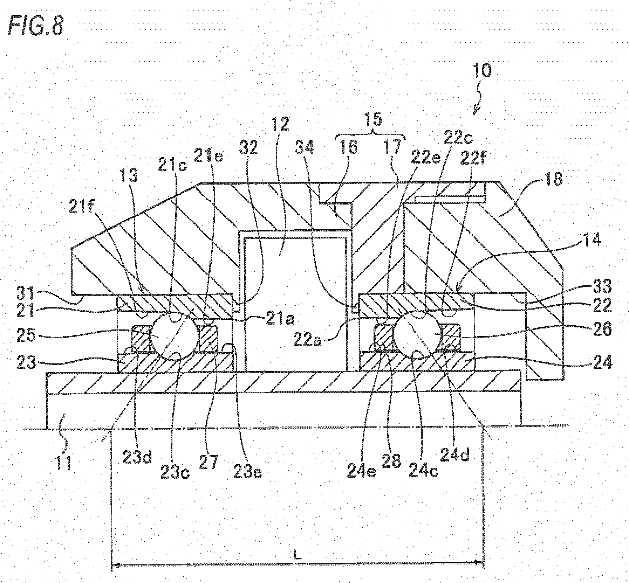

FIG. 8 is a half cross-sectional view of a main portion of a bearing unit for a dental air turbine according to a third embodiment. In a dental air turbine 10 of the fourth embodiment, the inner periphery of the outer ring 21 of the lower rolling bearing 13 has the shoulder portion 21e formed on one side with respect to the outer ring raceway surface 21c in the axis direction (the inner side in the axis direction) and the counter-bore 21f formed on the other side in the axis direction (the outer side in the axis direction), and the inner periphery of the outer ring 22 of the upper rolling bearing 14 has the shoulder portion 22e formed on one side with respect to the outer ring raceway surface 22c in the axis direction (the inner side in the axis direction) and the counter-bore 22f formed on the other side in the axis direction (the outer side in the axis direction).

Meanwhile, the outer peripheries of the inner rings 23 and 24 of the lower rolling bearing 13 and the upper rolling bearing 14 have the pair of shoulder portions 23d and 23e formed on both sides with respect to the inner ring raceway surface 23c in the axis direction, and the pair of shoulder portions 24d and 24e formed on both sides with respect to the inner ring raceway surface 24c in the axis direction, respectively.

In the fourth embodiment, in the same manner as those of the first and second embodiments, the lower rolling bearing 13 and the upper rolling bearing 14 are preloaded in a back-to-back arrangement direction by a fixed position preload manner. Since the lower rolling bearing 13 and the upper rolling bearing 14 are arranged back-to-back, even if the sizes of the bearings are the same as those in the related art, it is possible to lengthen the distance L between the acting points, whereby the moment rigidity of the rotating shaft 11 improves.

The other configurations and effects are the same as those of the second embodiment.

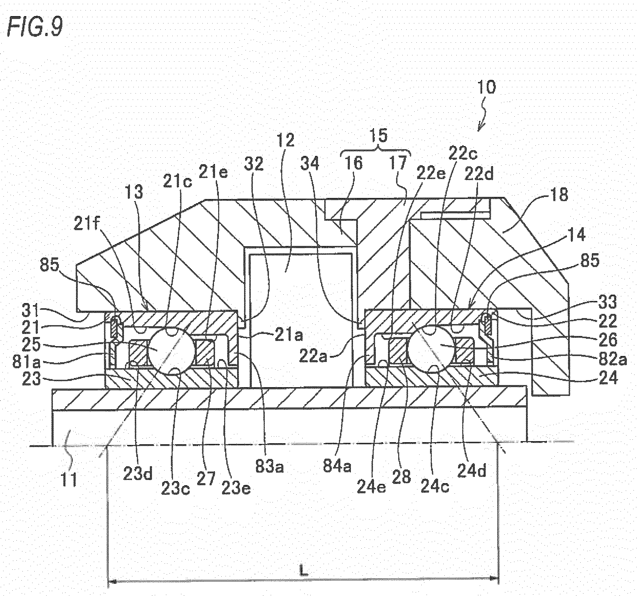

Also, in a modification of the fourth embodiment shown in FIG. 9, like the third embodiment, the lower rolling bearing 13 includes sealing means 81a and 83a provided on both sides of the outer ring 21 in the axis direction so as to face the outer periphery of the inner ring 23, and has a labyrinth structure between the sealing means 81 and 83 and the inner ring 23, and the upper rolling bearing 14 includes sealing means 82a and 84a provided on both sides of the outer ring 22 in the axis direction so as to face the outer periphery of the inner ring 24, and has a labyrinth structure between the sealing means 82 and 84 and the inner ring 24.

Specifically, the sealing means 81a, 82a, 83a, and 84a include sealing members 81a and 82a disposed in seal grooves formed in the counter-bores 21f and 22f of the outer rings 21 and 22 on the outer sides in the axis direction by use of retaining rings 85, and sealing portions 83a and 84a formed integrally with the outer rings 21 and 22 on the inner sides in the axis direction so as to extend from the shoulder portions 21e and 22e of the outer rings 21 and 22 toward the inner rings 23 and 24 on the inner sides in the radial directions, respectively.

Even in this modification, labyrinth structures may be provided only on the outer sides in the axis direction by the sealing members 81a and 82a provided on the outer sides in the axis direction and the outer peripheries of the inner rings 23 and 24, without providing the sealing members 83a and 84a on the inner sides in the axis direction.

### (FIFTH EMBODIMENT)

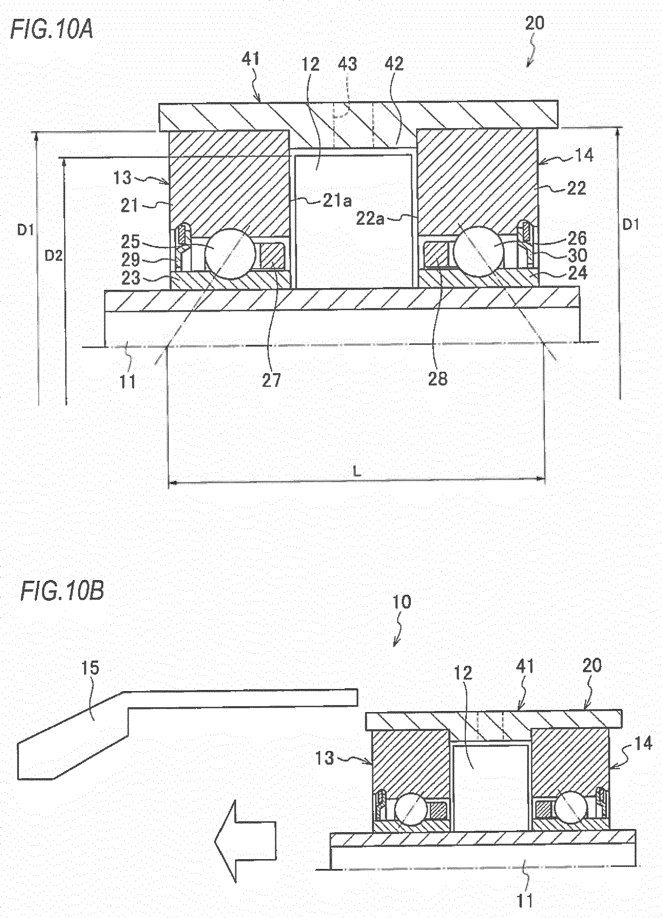

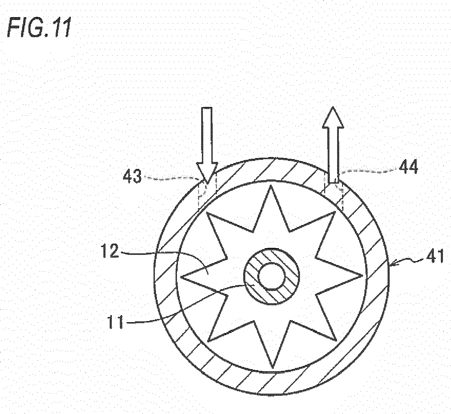

FIG. 10 is a half cross-sectional view of a main portion of a bearing unit for a dental air turbine according to a fifth embodiment, and FIG. 11 is a schematic cross-sectional view at an axis direction position where a turbine blade of FIG. 10 is positioned. In a dental air turbine 10 of the fifth embodiment, the rotating shaft 11, the turbine blade 12, the pair of rolling bearings 13 and 14, and a sleeve (a space member) 41 are unitized as a bearing unit 20 for a dental air turbine, which is disposed in the housing 15.

The external diameters D1 of the outer rings 21 and 22 are set to be larger than the external diameter D2 of the turbine blade 12, and the lower rolling bearing 13 and the upper rolling bearing 14 are arranged back-to-back on both sides of the turbine blade 12 fixed to the center of the rotating shaft 11 and rotatably support the rotating shaft 11.

The sleeve 41 which is fit on the outer rings 21 and 22 of the lower rolling bearing 13 and the upper rolling bearing 14 has a step portion 42 provided at the center in the axis direction, and protruding toward the internal diameter side, and abutting on the inner side surfaces 21a and 22a of the outer rings 21 and 22. As shown in FIGS. 10 and 11, at positions of the sleeve 41 which face the turbine blade 12, an air supply hole portion 43 for supplying compressed air to the turbine blade 12, and an exhaust hole portion 44 for discharging air are provided.

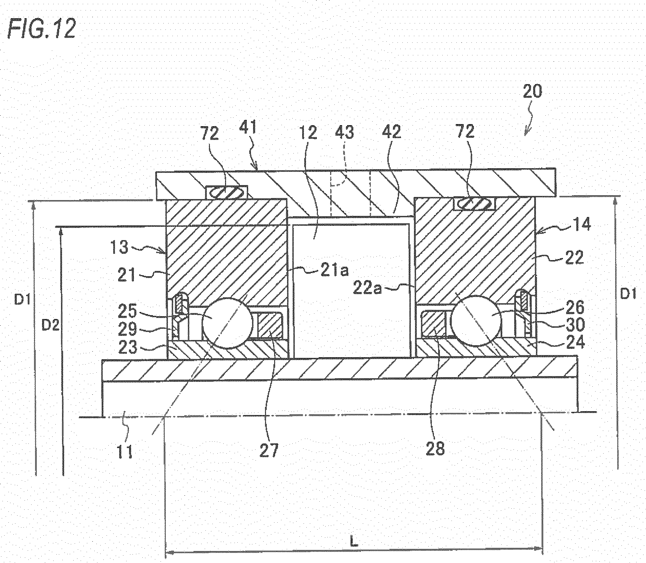

The outer rings 21 and 22 are fit in the sleeve 41 such that the inner side surfaces 21a and 22a of the outer rings abut on the step portion 42 of the sleeve 41, and the inner rings 23 and 24 are fit on the rotating shaft 11 to be fixed thereto such that a preload is applied. In this way, the lower rolling bearing 13 and the upper rolling bearing 14 are arranged back-to-back, whereby a bearing unit 20 for a dental air turbine is configured. The bearing unit 20 for a dental air turbine is assembled in the housing 15 as shown in FIG. 10B. Similarly to the related art, the outer rings 21 and 22 may be fixed to the sleeve 41 by loose fitting or through O-rings 72 (see a first modification shown in FIG. 12).

As described above, according to the bearing unit 20 for a dental air turbine of the fifth embodiment, the lower rolling bearing 13 and the upper rolling bearing 14 are arranged back-to-back by fitting the outer rings 21 and 22 into the sleeve 41 and fitting the inner rings 23 and 24 on the rotating shaft 11 such that a preload is applied thereto. Therefore, a preload is applied to the lower rolling bearing 13 and the upper rolling bearing 14, whereby it is possible to improve the load capability of the rotating shaft 11 against a moment load. Also, it is possible to unitize the rotating shaft 11 having the turbine blade 12 and the lower and upper rolling bearings 13 and 14, and it becomes easy to assemble them in the housing 15 of the dental air turbine 10.

Since the facing inner side surfaces 21a and 22a of the outer rings 21 and 22 of the lower rolling bearing 13 and the upper rolling bearing 14 are brought into contact with the side surfaces of the sleeve 41 in the axis direction, and the inner rings 23 and 24 are fit on the rotating shaft 11 to be fixed thereto, it is possible to apply a fixed position preload to the pair of the lower rolling bearing 13 and the upper rolling bearing 14 arranged back-to-back, by a simple configuration.

Also, the external diameters D1 of the outer rings 21 and 22 are larger than the external diameter D2 of the turbine blade 12, and the sleeve 41 is fixed to the housing 15, and has the air supply hole portion 43 for supplying air to the turbine blade 12, the exhaust hole portion 44 for discharging air, and the step portion 42 provided on the inner side in the radial direction so as to come into contact with the inner side surfaces 21a and 22a of the outer rings 21 and 22. Therefore, it is possible to bring the inner side surfaces 21a and 22a of the pair of outer rings 21 and 22 into contact with the sleeve 41, thereby regulating their positions, and apply a preload to the pair of rolling bearings 13 and 14 arranged back-to-back, by a simple structure, and it is possible to configure the high-accuracy bearing unit 20, whereby the cost of the unit is suppressed.

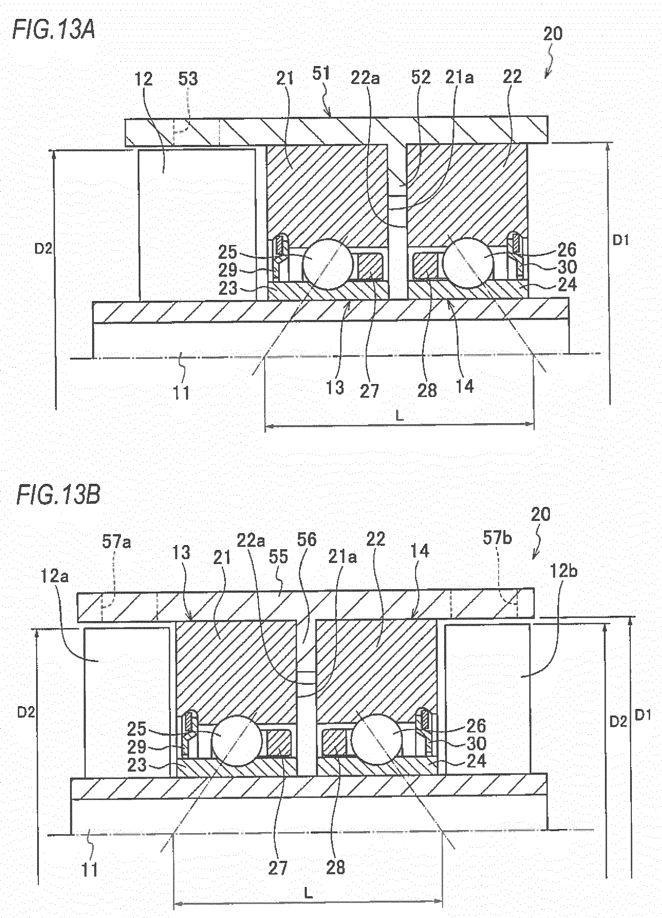

Also, in FIG. 10, the turbine blade 12 is disposed between the lower rolling bearing 13 and the upper rolling bearing 14. However, the turbine blade may be fixed to a portion of the rotating shaft 11 lower than the lower rolling bearing 13, like a second modification shown in FIG. 13A, or may be fixed to a portion of the rotating shaft 11 higher than the upper rolling bearing 14. Alternatively, like a third modification shown in FIG. 13B, a pair of turbine blades 12a and 12b may be fixed to portions of the rotating shaft 11 positioned on both outer sides of the lower rolling bearing 13 and the upper rolling bearing 14 in the axis direction.

That is, in a bearing unit 20 for a dental air turbine according to a second modification shown in FIG. 13A, the inner side surfaces 21a and 22a of the outer rings 21 and 22 of the lower rolling bearing 13 and the upper rolling bearing 14 are brought into contact with a step portion 52 protruding toward the inner side of a sleeve 51 in the radial direction, whereby the lower rolling bearing 13 and the upper rolling bearing 14 are arranged back-to-back and close to each other. At positions of the sleeve 51 which face the turbine blade 12, an air supply hole portion 53 for supplying compressed air to the turbine blade 12 and an exhaust hole portion (not shown) for discharging air are provided.

In a bearing unit 20 for a dental air turbine according to a third modification shown in FIG. 13B, the inner side surfaces 21a and 22a of the outer rings 21 and 22 of the lower rolling bearing 13 and the upper rolling bearing 14 are brought into contact with a step portion 56 protruding from the center of a sleeve 55 toward the inner side in the radial direction, whereby the lower rolling bearing 13 and the upper rolling bearing 14 are arranged back-to-back and close to each other. Also, at positions of the sleeve 55 which face the turbine blades 12a and 12b, air supply hole portions 57a and 57b for supplying compressed air to the turbine blades 12a and 12b and exhaust hole portions (not shown) for discharging air are provided.

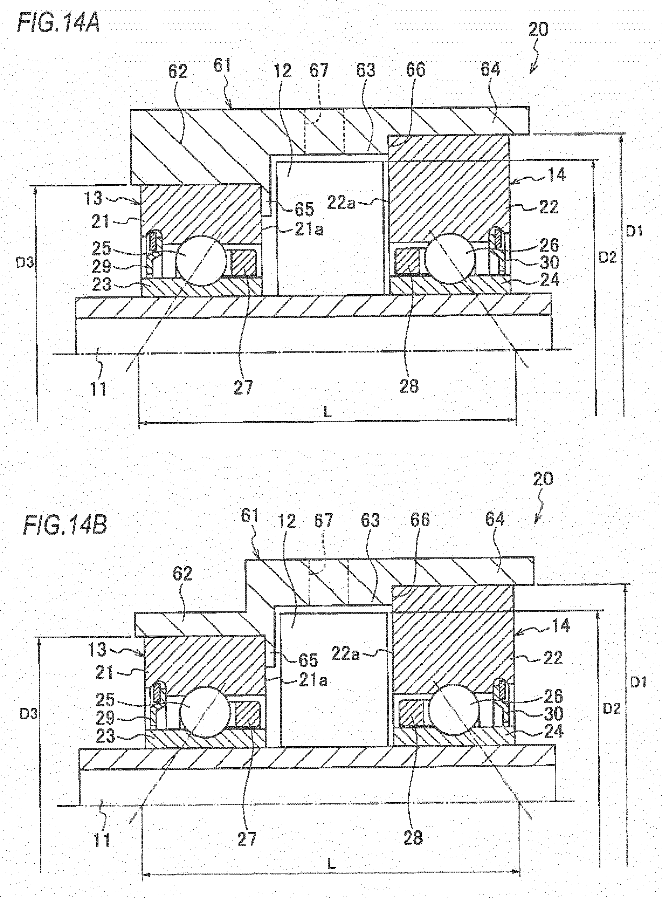

In FIG. 10, the external diameters D1 of the outer rings 21 and 22 are set to be larger than the external diameter D2 of the turbine blade 12. However, it is only needed to set the external diameter D1 of at least one of the outer rings 21 and 22 larger than the external diameter D2 of the turbine blade 12. For example, in a bearing unit 20 for a dental air turbine according to a fourth modification shown in FIG. 14A, the turbine blade 12 is disposed between the lower rolling bearing 13 and the upper rolling bearing 14, and the external diameter D3 of the outer ring 21 of the lower rolling bearing 13 is set to be smaller than the external diameter D2 of the turbine blade 12, and the external diameter D1 of the outer ring 22 of the upper rolling bearing 14 is set to be larger than the external diameter D2 of the turbine blade 12.

A sleeve 61 which is fit on the outer rings 21 and 22 of the lower rolling bearing 13 and the upper rolling bearing 14 has a small-diameter hole portion 62, a mid-diameter hole portion 63, and a large-diameter hole portion 64 formed corresponding to the lower rolling bearing 13, the turbine blade 12, and the upper rolling bearing 14, respectively. The outer ring 21 of the lower rolling bearing 13 is fit into the small-diameter hole portion 62, whereby the inner side surface 21a of the outer ring 21 comes into contact with a step portion 65 protruding from the small-diameter hole portion 62 toward the inner side in the radial direction. Also, the outer ring 22 of the upper rolling bearing 14 is fit into the large-diameter hole portion 64, whereby the inner side surface 22a of the outer ring 22 comes into contact with a step portion 66 between the mid-diameter hole portion 63 and the large-diameter hole portion 64, and the inner rings 23 and 24 are fit on the rotating shaft 11 to be fixed thereto, whereby a preload is applied to the lower rolling bearing 13 and the upper rolling bearing 14. At positions of the sleeve 61 which face the turbine blade 12, an air supply hole portion 67 for supplying compressed air to the turbine blade 12 and an exhaust hole portion (not shown) for discharging air are provided.

The configuration of the fourth modification can be applied to the bearing units 20 for dental air turbines according to the fifth embodiment of FIG. 10 and the second and third modifications of FIGS. 13 A and 13B.

Also, like a bearing unit 20 for a dental air turbine according to a fifth modifcation shown in FIG. 14B, the outer circumferential surface of the small-diameter hole portion 62 of the sleeve 61 may be formed in a stepped shape, and have a diameter smaller than those of the outer circumferential surfaces of the mid-diameter hole portion 63 and the large-diameter hole portion 64.

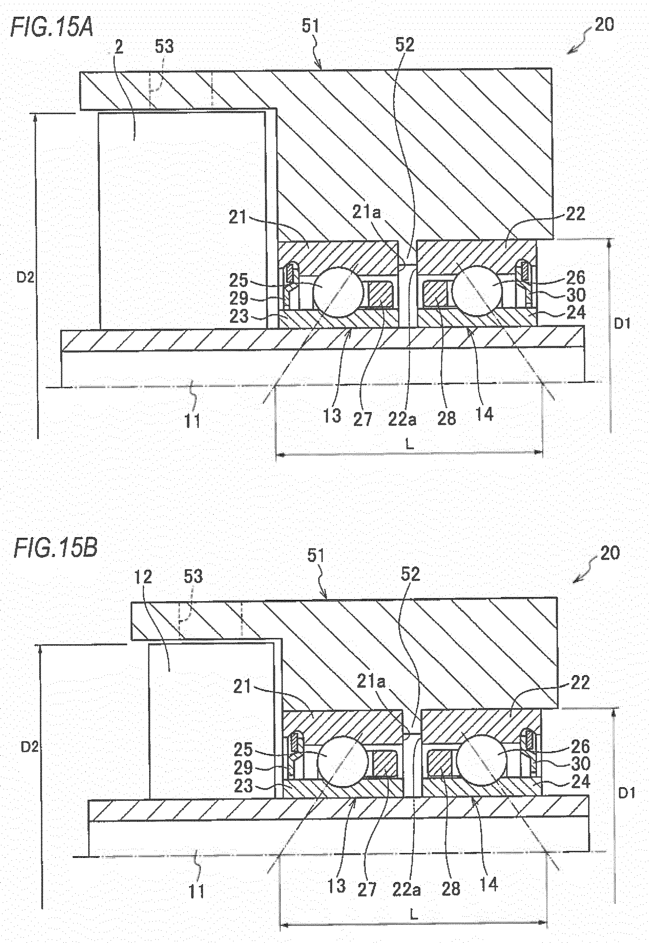

In bearing units 20 for dental air turbines like the second and third modifications of FIGS. 13A and 13B, the external diameters D1 of the outer rings 21 and 22 may be set to be smaller than the external diameter D2 of the turbine blade 12, and for example, rolling bearings smaller than bearings which are generally used may be applied. Specifically, in a bearing unit 20 for a dental air turbine according to a sixth modification shown in FIG. 15A, a turbine blade 12 having the same size as that of the turbine blade 12 shown in FIG. 13A is used, and small-sized rolling bearings 13 and 14 are used. Therefore, although the external diameters of the rotating shaft 11, the turbine blade 12, and the sleeve 51 are the same as those of the bearing unit 20 for a dental air turbine according to the second modification shown in FIG. 13A, it is possible to reduce the lengths of the sleeve 51 and the rotating shaft 11 in the axis direction, and it is possible to improve rotation performance.

Also, in a bearing unit 20 for a dental air turbine according to a seventh modification shown in FIG. 15B, although the external diameter of the rotating shaft 11 is the same as that of the rotating shaft 11 shown in FIG. 13A, since small-sized rolling bearings 13 and 14 are used, the external diameter and length of the turbine blade 12 decreases, and the external diameter and length of the sleeve 51 decreases, whereby the size of the whole unit decreases. Therefore, although the size of the turbine blade 12 is small, since the sizes of the bearings are small, it is possible to maintain rotation performance and functions.

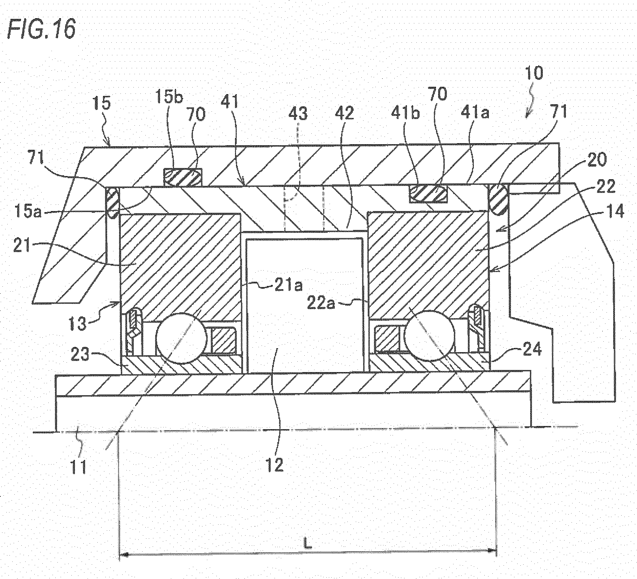

Further, the bearing unit 20 for a dental air turbine having the sleeve according to the fifth embodiment may be assembled in the housing 15 with elastic members interposed therebetween. For example, a bearing unit 20 for a dental air turbine according to an eighth modification shown in FIG. 16 is an example of application to the bearing unit 20 for a dental air turbine shown in FIG. 10, and an O-ring groove 41b is formed at a position of the outer circumferential surface 41a of the sleeve 41 corresponding to the outer ring 22, and an O-ring groove 15b is formed at a position of the inner circumferential surface 15a of the housing 15 corresponding to the outer ring 21. O-rings 70 are installed in the O-ring grooves 15b and 41b, and the sleeve 41 and the housing 15 are fit together. Also, even between the outer end surfaces of the sleeve 41 in the axis direction and the inner end surfaces of the housing 15 in the axis direction, O-rings 71 may be installed. Accordingly, it is possible to suppress vibration of the rotating shaft 11 rotating at high speed from being transmitted to the housing 15.

Although a case where the O-ring grooves 15b and 41b are formed in the inner circumferential surface 15a of the housing 15 and the outer circumferential surface 41a of the sleeve 41, respectively, has been described, the two O-ring grooves may be formed in any one of the inner circumferential surface 15a of the housing 15 and the outer circumferential surface 41a of the sleeve 41.

Also, the configuration of the eighth modification can be applied to the bearing units 20 for dental air turbines according to the first to seventh modifications.

Even in the fifth embodiment, as long as the lower rolling bearing 13 and the upper rolling bearing 14 arranged back-to-back, they may be configured such that a constant preload is applied thereto. Even in this case, a spring member 35 abuts on at least one of the facing inner side surfaces 21a and 22a of the outer rings 21 and 22 of the lower rolling bearing 13 and the upper rolling bearing 14 and the outer side surfaces 23a and 24a of the inner rings 23 and 24 in the axis direction.

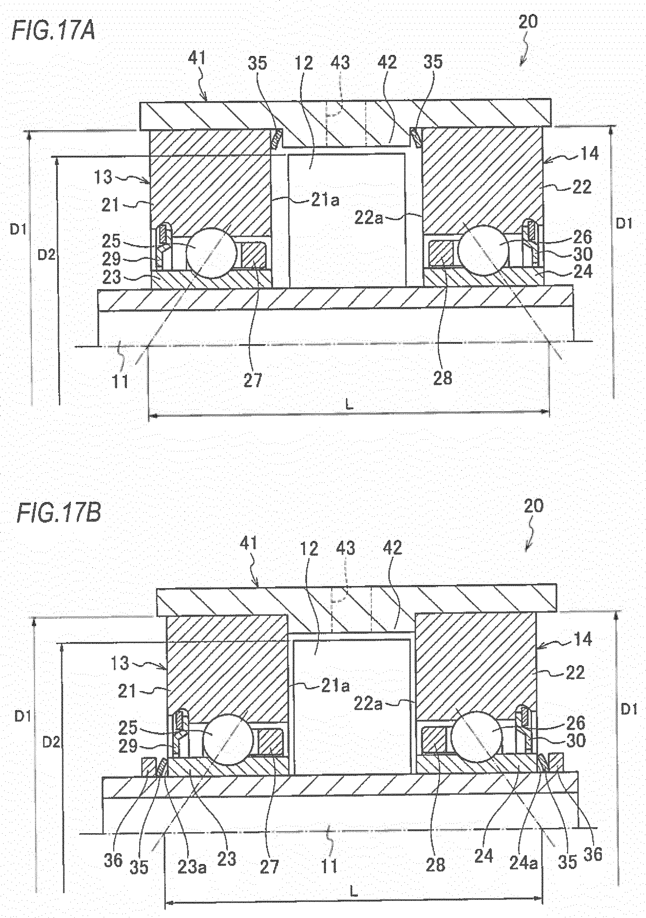

That is, like a bearing unit 20 for a dental air turbine according to a ninth modification shown in FIG. 17A, spring members 35 (leaf springs or spring washers) are disposed between the facing side surfaces of the outer rings 21 and 22 of the lower rolling bearing 13 and the upper rolling bearing 14 and the side surfaces of the step portion 42 of the sleeve 41 in the axis direction, respectively, and the respective inner rings 23 and 24 are fit on the rotating shaft 11 to be fixed thereto. Accordingly, the lower rolling bearing 13 and the upper rolling bearing 14 are arranged back-to-back and a constant preload is applied thereto.

Alternatively, like a bearing unit 20 for a dental air turbine according to a tenth modification shown in FIG. 17B, the facing side surfaces of the outer rings 21 and 22 of the lower rolling bearing 13 and the upper rolling bearing 14 come into contact with the side surfaces of the step portion 42 of the sleeve 41 in the axis direction, and the respective inner rings 23 and 24 are fit on the rotating shaft 11 while fixing the outer side surfaces 23a and 24a of the inner rings 23 and 24 in the axis direction to fixing rings 36 with the spring members 35 (leaf springs or spring washers) interposed therebetween, respectively. Even in this case, the lower rolling bearing 13 and the upper rolling bearing 14 are arranged back-to-back, and a constant preload is applied thereto.

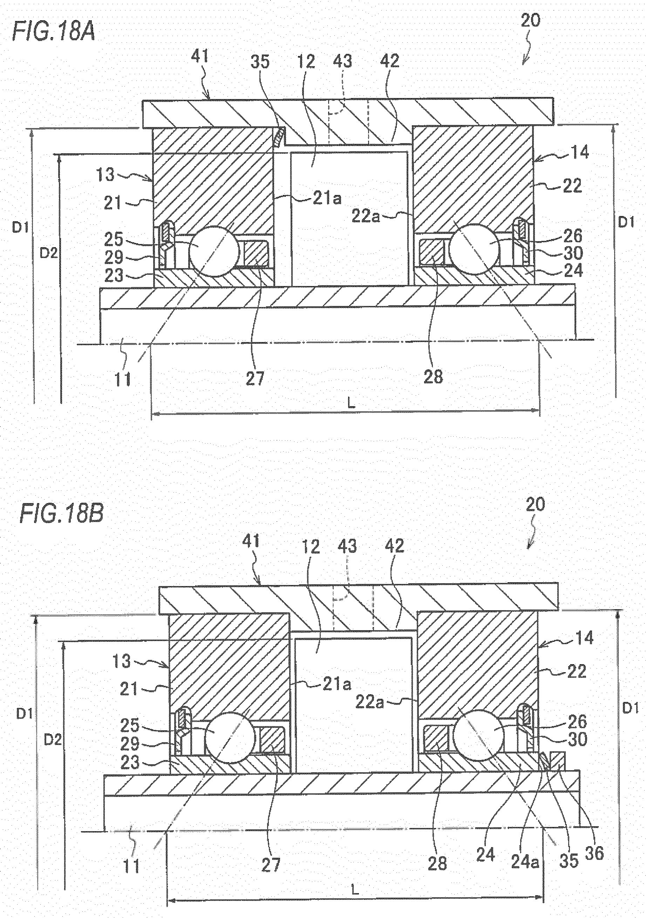

Also, like a bearing unit 20 for a dental air turbine according to an eleventh modification shown in FIG. 18A. a spring member 35 is disposed in any one of the gaps between the facing side surfaces of the outer rings 21 and 22 of the lower rolling bearing 13 and the upper rolling bearing 14 and the side surfaces of the step portion 42 of the sleeve 41 in the axis direction, and the respective inner rings 23 and 24 are fit on the rotating shaft 11 to be fixed thereto. Even in this case, the lower rolling bearing 13 and the upper rolling bearing 14 are arranged back-to-back, and a constant preload is applied thereto.

Alternatively, like a bearing unit 20 for a dental air turbine according to a twelfth modification shown in FIG. 18B, the facing side surfaces of the outer rings 21 and 22 of the lower rolling bearing 13 and the upper rolling bearing 14 come into contact with the side surfaces of the step portion 42 of the sleeve 41 in the axis direction, and the respective inner rings 23 and 24 are fixed to the rotating shaft 11 while fixing only one of the outer side surfaces 23a and 24a of the inner rings 23 and 24 in the axis direction to a fixing ring 36 with a spring member 35 interposed therebetween and fitting the other one of the inner rings 23 and 24 on the rotating shaft 11 to be fixed. Even in this case, the lower rolling bearing 13 and the upper rolling bearing 14 are arranged back-to-back, and a constant preload is applied thereto.

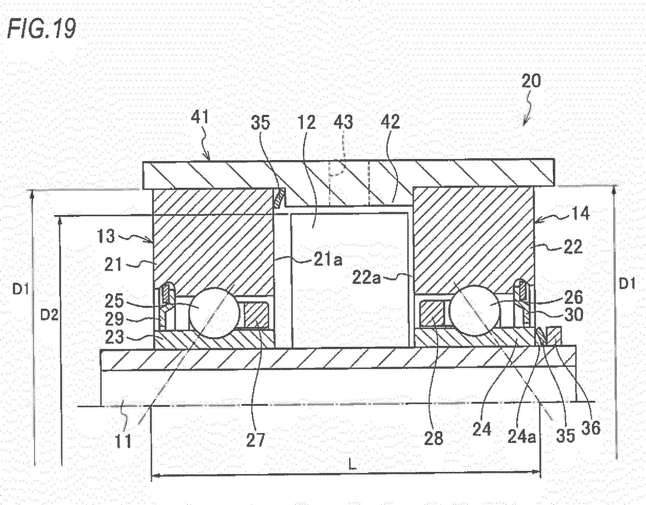

Further, like a bearing unit 20 for a dental air turbine according to a thirteenth modification shown in FIG. 19, a spring member 35 is disposed in any one of the gaps between the facing side surfaces of the outer rings 21 and 22 of the lower rolling bearing 13 and the upper rolling bearing 14 and the side surfaces of the step portion 42 of the sleeve 41 in the axis direction, and the respective inner rings 23 and 24 are fit on the rotating shaft 11 while fixing only one of the outer side surfaces 23a and 24a of the inner rings 23 and 24 in the axis direction to a fixing ring 36 with a spring member 35 interposed therebetween and fitting the other one of the inner rings 23 and 24 on the rotating shaft 11 to be fixed thereto. Even in this case, the lower rolling bearing 13 and the upper rolling bearing 14 are arranged back-to-back, and a constant preload is applied thereto.

The configurations of the ninth to third modifications can be applied to the bearing units 20 for dental air turbines according to the first to eight modifications.

### (SIXTH EMBODIMENT)

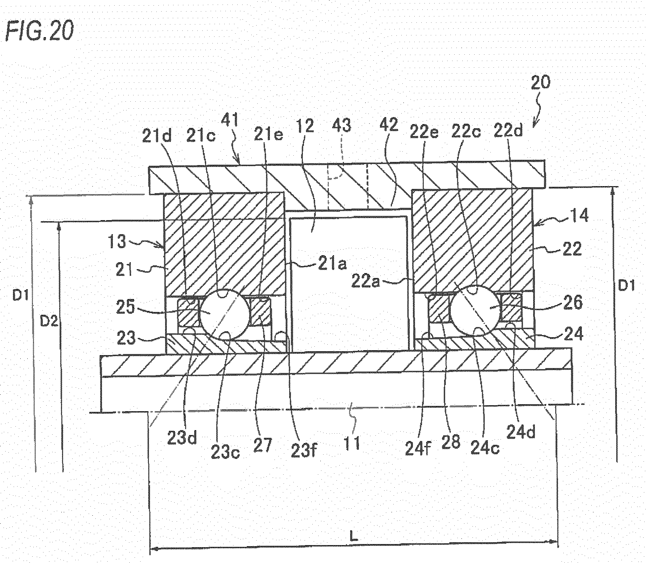

FIG. 20 is a half cross-sectional view of a main portion of a bearing unit for a dental air turbine according to a sixth embodiment. The sixth embodiment is different from the fifth embodiment in the configurations of the lower rolling bearing 13 and the upper rolling bearing 14. Therefore, parts identical to or equivalent to those of the fifth embodiment are denoted by the same reference symbols, and a description thereof will not be made or will be shortly made.

That is, in the sixth embodiment, the lower rolling bearing 13 and the upper rolling bearing 14 are angular ball bearings, and the outer periphery of the inner ring 23 has a shoulder portion 23d formed on one side with respect to the inner ring raceway surface 23c in the axis direction (the outer side in the axis direction), and a counter-bore 23f formed on the other side in the axis direction (the inner side in the axis direction), and the outer periphery of the inner ring 24 has a shoulder portion 24d formed on one side with respect to the inner ring raceway surface 24c in the axis direction (the outer side in the axis direction), and a counter-bore 24f formed on the other side in the axis direction (the inner side in the axis direction). Also, the inner periphery of the outer ring 21 has a pair of shoulder portions 21d and 21e formed on both sides with respect to the outer ring raceway surface 21c in the axis direction, and the inner periphery of the outer ring 22 has a pair of shoulder portions 22d and 22e formed on both sides with respect to the outer ring raceway surface 22c in the axis direction.

That is, according to the bearing unit 20 for a dental air turbine according to the sixth embodiment, the lower rolling bearing 13 and the upper rolling bearing 14 are configured by angular ball bearings, and are arranged back-to-back while fitting the outer rings 21 and 22 into the sleeve 41 and fitting the inner rings 23 and 24 on the rotating shaft 11 such that a preload is applied thereto. Therefore, a preload is applied to the lower rolling bearing 13 and the upper rolling bearing 14, whereby it is possible to improve the load capability of the rotating shaft 11 against a moment load. Also, it is possible to unitize the rotating shaft 11 having the turbine blade 12 and the lower and upper rolling bearings 13 and 14, and it becomes easy to assemble them in the housing 15 of the dental air turbine 10.

The other configurations and effects are the same as those of the fifth embodiment.

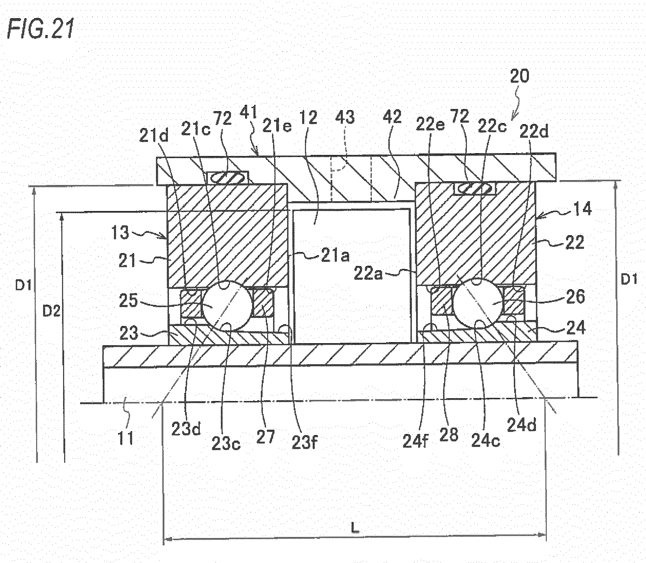

Even in the sixth embodiment, like a first modification shown in FIG. 21, similarly to the related art, the outer rings 21 and 22 may be fixed to the sleeve 41 by loose fitting or through O-rings 72.

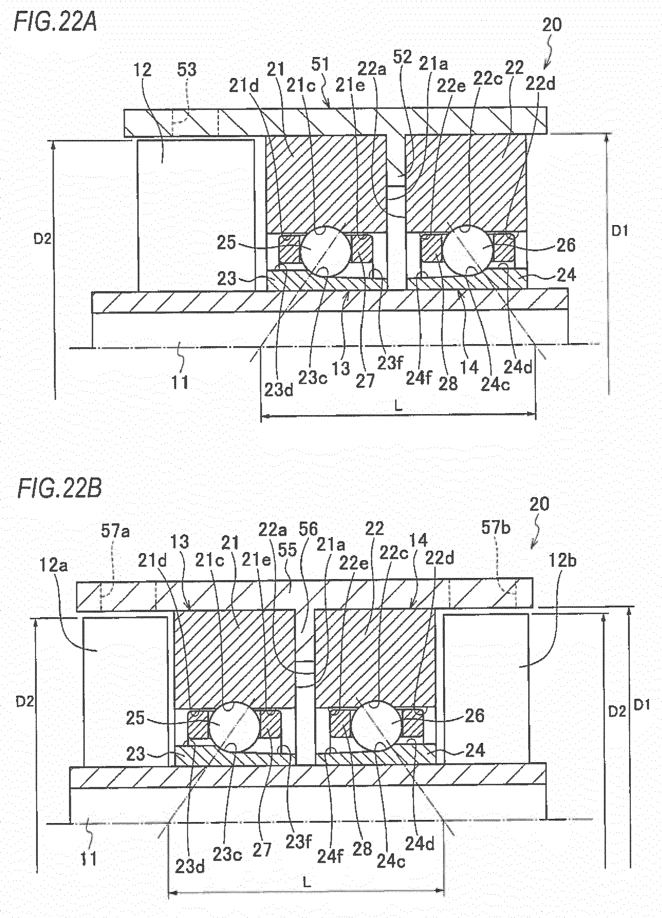

Also, in FIG. 20, the turbine blade 12 is disposed between the lower rolling bearing 13 and the upper rolling bearing 14. However, the turbine blade may be fixed to a portion of the rotating shaft 11 lower than the lower rolling bearing 13, like a second modification shown in FIG. 22A, or may be fixed to a portion of the rotating shaft 11 higher than the upper rolling bearing 14. Alternatively, like a third modification shown in FIG. 22B, a pair of turbine blades 12a and 12b may be fixed to portions of the rotating shaft 11 positioned on both outer sides of the lower rolling bearing 13 and the upper rolling bearing 14 in the axis direction.

That is, in a bearing unit 20 for a dental air turbine of a according to a second modification shown in FIG. 22A, the inner side surfaces 21a and 22a of the outer rings 21 and 22 of the lower rolling bearing 13 and the upper rolling bearing 14 are brought into contact with a step portion 52 protruding toward the inner side of a sleeve 51 in the radial direction, whereby the lower rolling bearing 13 and the upper rolling bearing 14 are arranged back-to-back and close to each other. At positions of the sleeve 51 which face the turbine blade 12, an air supply hole portion 53 for supplying compressed air to the turbine blade 12 and an exhaust hole portion (not shown) for discharging air are provided.

In a bearing unit 20 for a dental air turbine according to a third modification shown in FIG. 22B, the inner side surfaces 21a and 22a of the outer rings 21 and 22 of the lower rolling bearing 13 and the upper rolling bearing 14 are brought into contact with a step portion 56 protruding from the center of a sleeve 55 toward the inner side in the radial direction, whereby the lower rolling bearing 13 and the upper rolling bearing 14 are arranged back-to-back and close to each other. At positions of the sleeve 55 which face the turbine blades 12a and 12b, air supply hole portions 57a and 57b for supplying compressed air to the turbine blades 12a and 12b and exhaust hole portions (not shown) for discharging air are provided.

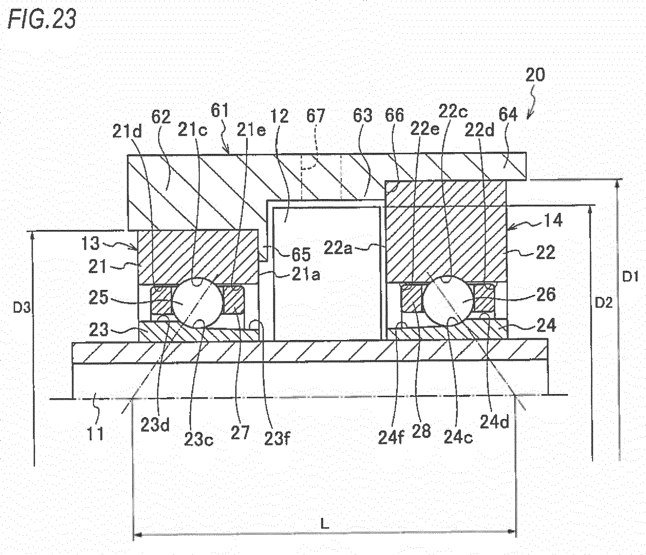

In FIG. 20, the external diameters D1 of the outer rings 21 and 22 are set to be larger than the external diameter D2 of the turbine blade 12. However, it is only needed to set the external diameter D1 of at least one of the outer rings 21 and 22 larger than the external diameter D2 of the turbine blade 12. For example, in a bearing unit 20 for a dental air turbine according to a fourth modification shown in FIG. 23, the turbine blade 12 is disposed between the lower rolling bearing 13 and the upper rolling bearing 14, and the external diameter D3 of the outer ring 21 of the lower rolling bearing 13 is set to be smaller than the external diameter D2 of the turbine blade 12, and the external diameter D1 of the outer ring 22 of the upper rolling bearing 14 is set to be larger than the external diameter D2 of the turbine blade 12.

A sleeve 61 which is fit on the outer rings 21 and 22 of the lower rolling bearing 13 and the upper rolling bearing 14 has a small-diameter hole portion 62, a mid-diameter hole portion 63, and a large-diameter hole portion 64 formed corresponding to the lower rolling bearing 13, the turbine blade 12, and the upper rolling bearing 14, respectively. The outer ring 21 of the lower rolling bearing 13 is fit into the small-diameter hole portion 62, whereby the inner side surface 21a of the outer ring 21 comes into contact with a step portion 65 protruding from the small-diameter hole portion 62 toward the inner side in the radial direction. The outer ring 22 of the upper rolling bearing 14 is fit into the large-diameter hole portion 64, whereby the inner side surface 22a of the outer ring 22 comes into contact with a step portion 66 between the mid-diameter hole portion 63 and the large-diameter hole portion 64, and the inner rings 23 and 24 are fit on the rotating shaft 11 to be fixed thereto, whereby a preload is applied to the lower rolling bearing 13 and the upper rolling bearing 14. At positions of the sleeve 61 which face the turbine blade 12, an air supply hole portion 67 for supplying compressed air to the turbine blade 12 and an exhaust hole portion (not shown) for discharging air are provided.

The configuration of the fourth modification can be applied to the bearing units 20 for dental air turbines according to the fourth embodiment of FIG. 20 and the second and third modifications of FIGS. 21A and 21B.

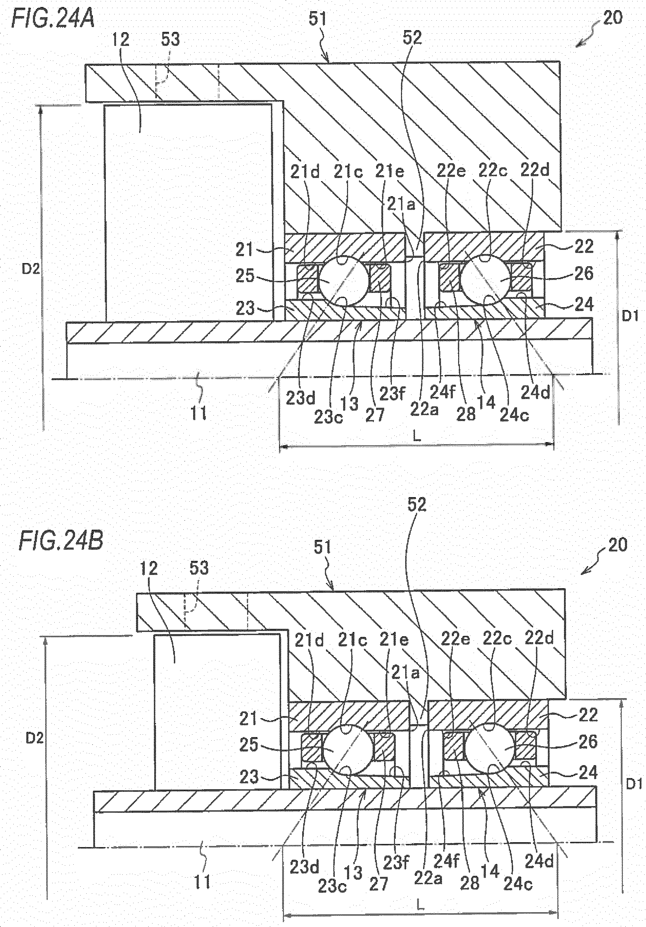

Also, in bearing units 20 for dental air turbines like the second and third modifications of FIGS. 22A and 22B, the external diameters D1 of the outer rings 21 and 22 may be set to be smaller than the external diameter D2 of the turbine blade 12, and for example, rolling bearings smaller than bearings which are generally used may be applied. Specifically, in a bearing unit 20 for a dental air turbine according to a fifth modification shown in FIG. 24A, a turbine blade 12 having the same size as that of the turbine blade 12 shown in FIG. 22A is used, and small-sized rolling bearings 13 and 14 are used. Therefore, although the external diameters of the rotating shaft 11, the turbine blade 12, and the sleeve 51 are the same as those of the bearing unit 20 for a dental air turbine according to the second modification shown in FIG. 22A, it is possible to reduce the lengths of the sleeve 51 and the rotating shaft 11 in the axis direction, and it is possible to improve rotation performance.

In a bearing unit 20 for a dental air turbine according to a sixth modification shown in FIG. 24B, although the external diameter of the rotating shaft 11 is the same as that of the rotating shaft 11 shown in FIG. 22A, since small-sized rolling bearings 13 and 14 are used, the external diameter and length of the turbine blade 12 decreases, and the external diameter and length of the sleeve 51 decreases, whereby the size of the whole unit decreases. Therefore, although the size of the turbine blade 12 is small, since the sizes of the bearings are small, it is possible to maintain rotation performance and functions.

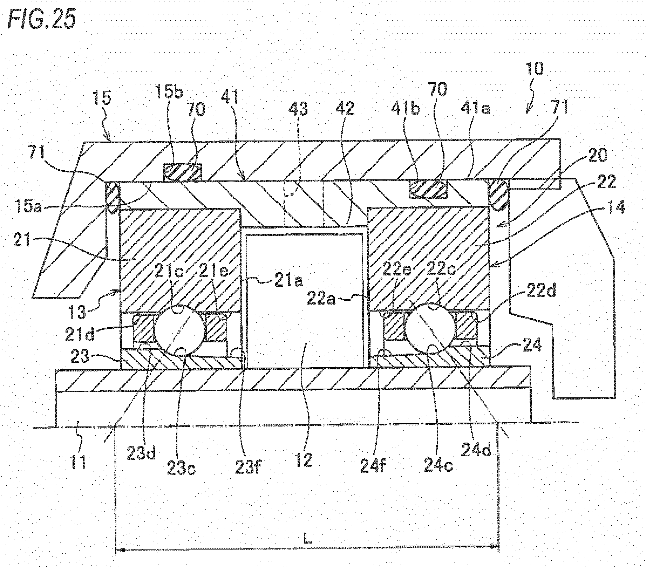

Further, the bearing unit 20 for a dental air turbine having the sleeve according to the sixth embodiment may be assembled in the housing 15 with elastic members interposed therebetween. For example, a bearing unit 20 for a dental air turbine according to a seventh modification shown in FIG. 25 is an example of application to the bearing unit 20 for a dental air turbine shown in FIG. 20, and an O-ring groove 41b is formed at a position of the outer circumferential surface 41a of the sleeve 41 corresponding to the outer ring 22, and an O-ring groove 15b is formed at a position of the inner circumferential surface 15a of the housing 15 corresponding to the outer ring 21. O-rings 70 are installed in the O-ring grooves 15b and 41b, and the sleeve 41 and the housing 15 are fit together. Also, even between the outer end surfaces of the sleeve 41 in the axis direction and the inner end surfaces of the housing 15 in the axis direction, O-rings 71 may be installed. Accordingly, it is possible to suppress vibration of the rotating shaft 11 rotating at high speed from being transmitted to the housing 15.

Although a case where the O-ring grooves 15b and 41b are formed in the inner circumferential surface 15a of the housing 15 and the outer circumferential surface 41a of the sleeve 41, respectively, has been described, the two O-ring grooves may be formed in any one of the inner circumferential surface 15a of the housing 15 and the outer circumferential surface 41a of the sleeve 41.

The configuration of the seventh modification can be applied to the bearing units 20 for dental air turbines according to the first to sixth modifications.

Even in the sixth embodiment, as long as the lower rolling bearing 13 and the upper rolling bearing 14 arranged back-to-back, they may be configured such that a constant preload is applied thereto. In this case, a spring member 35 abuts on at least one of the facing inner side surfaces 21a and 22a of the outer rings 21 and 22 of the lower rolling bearing 13 and the upper rolling bearing 14 and the outer side surfaces 23a and 24a of the inner rings 23 and 24 in the axis direction.

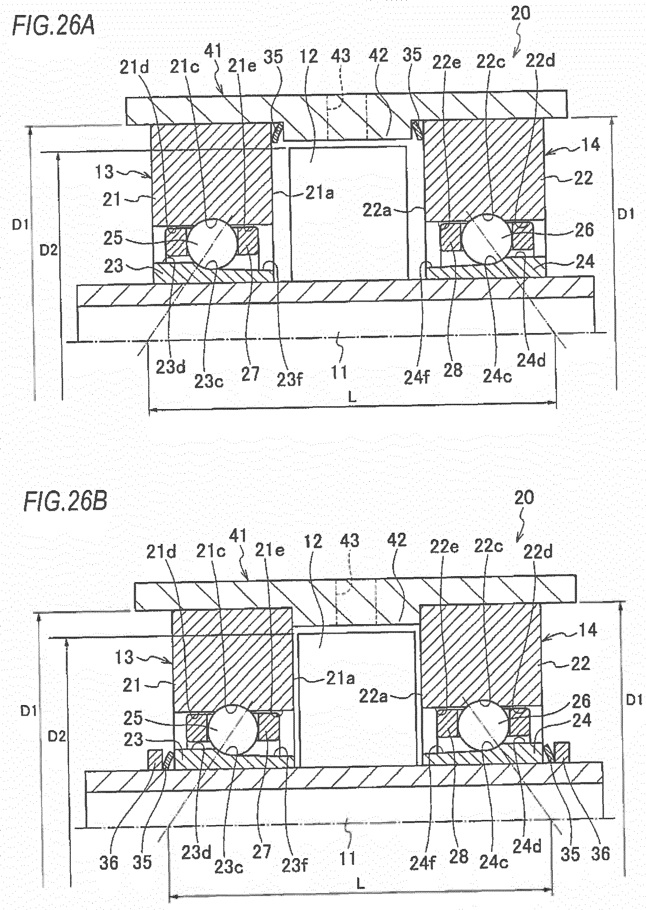

That is, like a bearing unit 20 for a dental air turbine according to an eighth modification shown in FIG. 26A, spring members 35 (leaf springs or spring washers) are disposed between the facing side surfaces of the outer rings 21 and 22 of the lower rolling bearing 13 and the upper rolling bearing 14 and the side surfaces of the step portion 42 of the sleeve 41 in the axis direction, respectively, and the respective inner rings 23 and 24 are fit on the rotating shaft 11 to be fixed thereto. Accordingly, the lower rolling bearing 13 and the upper rolling bearing 14 are arranged back-to-back, and a constant preload is applied thereto.

Alternatively, like a bearing unit 20 for a dental air turbine according to a ninth modification shown in FIG. 26B, the facing side surfaces of the outer rings 21 and 22 of the lower rolling bearing 13 and the upper rolling bearing 14 come into contact with the side surfaces of the step portion 42 of the sleeve 41 in the axis direction, and the respective inner rings 23 and 24 are fit on the rotating shaft 11 while fixing the outer side surfaces 23a and 24a of the inner rings 23 and 24 in the axis direction to fixing rings 36 with the spring members 35 (leaf springs or spring washers) interposed therebetween, respectively. In this case, the lower rolling bearing 13 and the upper rolling bearing 14 are arranged back-to-back, and a constant preload is applied thereto.

Also, the present invention is not limited to the bearing units 20 for dental air turbines according to the eighth and ninth modifications, and similarly to the fifth embodiment, a spring member 35 may be disposed in any one of the gaps between the facing side surfaces of the outer rings 21 and 22 of the lower rolling bearing 13 and the upper rolling bearing 14 and the side surfaces of the step portion 42 of the sleeve 41 in the axis direction, and the respective inner rings 23 and 24 may be fit on the rotating shaft 11 to be fixed thereto.

Alternatively, the facing side surfaces of the outer rings 21 and 22 of the lower rolling bearing 13 and the upper rolling bearing 14 may come into contact with the side surfaces of the step portion 42 of the sleeve 41 in the axis direction, and the respective inner rings 23 and 24 may be fit on the rotating shaft 11 while fixing only one of the outer side surfaces 23a and 24a of the inner rings 23 and 24 in the axis direction to a fixing ring 36 with a spring member 35 interposed therebetween and fitting the other one of the inner rings 23 and 24 on the rotating shaft 11 to be fixed therebetween.

Further, a spring member 35 may be disposed in any one of the gaps between the facing side surfaces of the outer rings 21 and 22 of the lower rolling bearing 13 and the upper rolling bearing 14 and the side surfaces of the step portion 42 of the sleeve 41 in the axis direction, and the respective inner rings 23 and 24 may be fit on the rotating shaft 11 while fixing only one of the outer side surfaces 23a and 24a of the inner rings 23 and 24 in the axis direction to a fixing ring 36 with a spring member 36 interposed therebetween and fitting the other one of the inner rings 23 and 24 on the rotating shaft 11 to be fixed thereto.

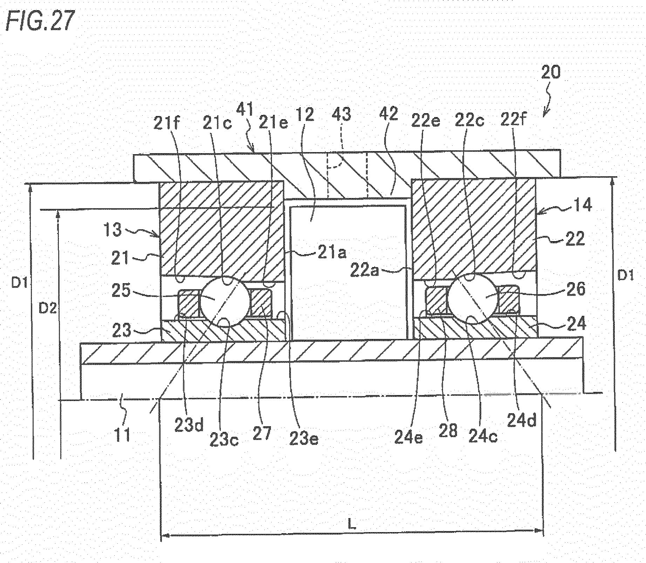

Also, in a bearing unit 20 for a dental air turbine according to a tenth modification shown in FIG. 27, similarly to the fourth embodiment, the lower rolling bearing 13 and the upper rolling bearing 14 may be configured by the angular ball bearings having counter-bores 21f and 22f formed in the outer rings 21 and 22.

That is, the inner periphery of the outer ring 21 of the lower rolling bearing 13 has the shoulder portion 21e formed on one side with respect to the outer ring raceway surface 21c in the axis direction (the inner side in the axis direction) and the counter-bore 21 f formed on the other side in the axis direction (the outer side in the axis direction), and the inner periphery of the outer ring 22 of the upper rolling bearing 14 has the shoulder portion 22e formed on one side with respect to the outer ring raceway surface 22c in the axis direction (the inner side in the axis direction) and the counter-bore 22f formed on the other side in the axis direction (the outer side in the axis direction). The outer peripheries of the inner rings 23 and 24 have the pair of shoulder portions 23d and 23e formed on both sides with respect to the inner ring raceway surface 23c in the axis direction, and the pair of shoulder portions 24d and 24e formed on both sides with respect to the inner ring raceway surface 24c in the axis direction, respectively.

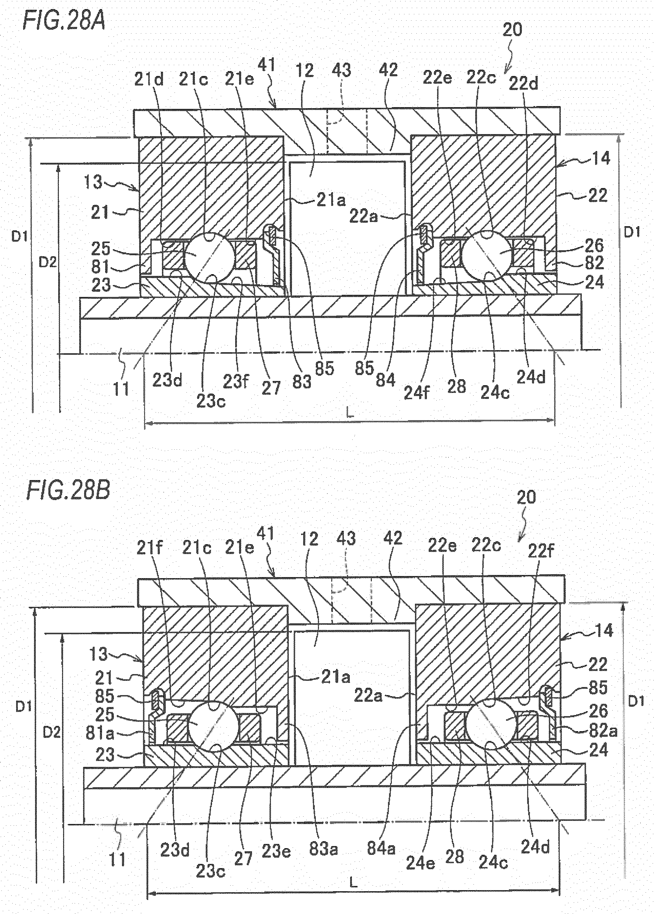

Moreover, in bearing units 20 for dental air turbines according to eleventh and twelfth modifications shown in FIGS. 28A and 28B, similarly to the third embodiment, the lower rolling bearing 13 includes sealing means 81 and 83 (81a and 83a) provided on both sides of the outer ring 21 in the axis direction so as to face the outer periphery of the inner ring 23 and has a labyrinth structure between the sealing means 81 and 83 (81a and 83a) and the outer periphery of the inner ring 23, and the upper rolling bearing 14 includes sealing means 82 and 84 (82a and 84a) provided on both sides of the outer ring 22 in the axis direction so as to face the outer periphery of the inner ring 24 and has a labyrinth structure between the sealing means 82 and 84 (82a and 84a) and the outer periphery of the inner ring 24.

Specifically, in the eleventh modification shown in FIG. 28A, the sealing means 81, 82, 83, and 84 include sealing portions 81 and 82 formed integrally with the outer rings 21 and 22 on the outer sides in the axis direction so as to extend from the shoulder portions 21d and 22d of the outer rings 21 and 22 toward the inner rings 23 and 24 in the radial directions, and the sealing members 83 and 84 disposed in seal grooves formed in the shoulder portions 21e and 22e of the outer rings 21 and 22 on the inner sides in the axis direction by use of retaining rings 85.

The sealing members 83 and 84 provided on the inner sides in the axis direction and the sealing portions 81 and 82 provided on the outer sides in the axis direction may be inversely configured.

In the twelfth modification shown in FIG. 28B, the sealing means 81a, 82a, 83a, and 84a include sealing members 81a and 82a disposed in seal grooves formed in the counter-bores 21f and 22f of the outer rings 21 and 22 on the outer sides in the axis direction by use of retaining rings 85, and sealing portions 83a and 84a formed integrally with the outer rings 21 and 22 on the inner sides in the axis direction so as to extend from the shoulder portions 21e and 22e of the outer rings 21 and 22 toward the inner rings 23 and 24 in the radial directions.

In the eleventh and twelfth modifications, labyrinth structures may be provided only on the outer sides in the axis direction by the sealing means 81 and 82 (81a and 82a) provided on the outer sides in the axis direction and the outer peripheries of the inner rings 23 and 24, without providing the sealing means 83 and 84 (83a and 84a) on the inner sides in the axis direction.

### (SEVENTH EMBODIMENT)

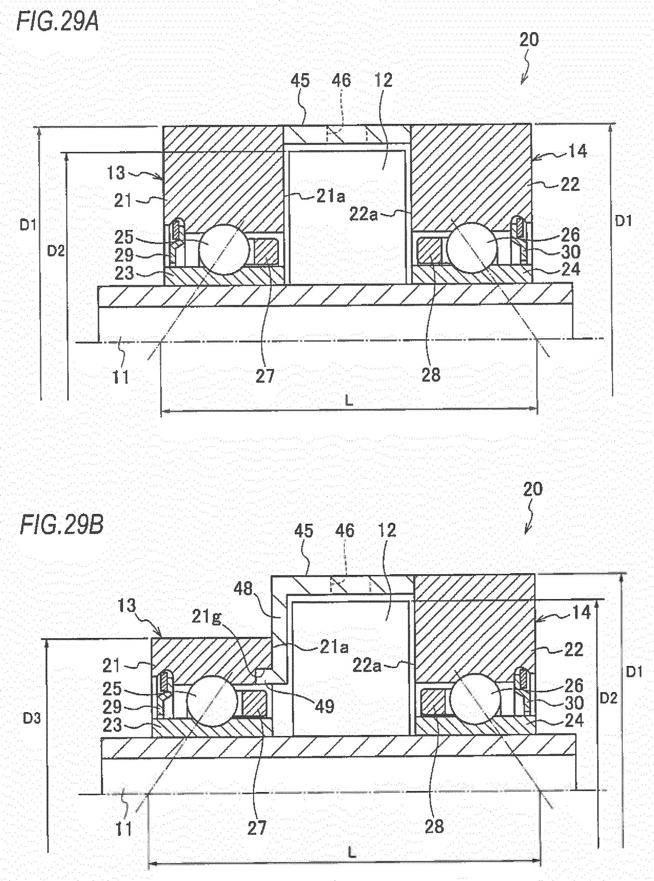

FIG. 29 is a half cross-sectional view of a main portion of a bearing unit for a dental air turbine according to a seventh embodiment, and in a dental air turbine 10 of the seventh embodiment, the rotating shaft 11, the turbine blade 12, the pair of rolling bearings 13 and 14, and an outer ring spacer (a space member) 45 are unitized as a bearing unit 20 for a dental air turbine, which is disposed in the housing 15.

The external diameters D1 of the outer rings 21 and 22 are set to be larger than the external diameter D2 of the turbine blade 12, and the lower rolling bearing 13 and the upper rolling bearing 14 are arranged back-to-back on both sides of the turbine blade 12 fixed to the center of the rotating shaft 11 and rotatably support the rotating shaft 11.

The outer ring spacer 45 is disposed between the outer rings 21 and 22 of the lower rolling bearing 13 and the upper rolling bearing 14, and the inner side surfaces 21a and 22a of the outer rings 21 and 22 come into contact with side surfaces of the outer ring spacer 45 in the axis direction, respectively. At positions of the outer ring spacer 45 which face the turbine blade 12, an air supply hole portion 46 for supplying compressed air to the turbine blade 12 and an exhaust hole portion (not shown) for discharging air are provided.

In a state where the outer ring spacer 45 is interposed between the outer rings 21 and 22, the inner rings 23 and 24 are fit into the rotating shaft 11 to be fixed thereto such that a preload is applied. In this way, the lower rolling bearing 13 and the upper rolling bearing 14 are arranged back-to-back, whereby a bearing unit 20 for a dental air turbine is configured.

As described above, according to the bearing unit 20 for a dental air turbine according to the seventh embodiment, the lower rolling bearing 13 and the upper rolling bearing 14 are arranged back-to-back while interposing the outer ring spacer 45 between the outer rings 21 and 22 and fitting the inner rings 23 and 24 on the rotating shaft 11 such that a preload is applied thereto. Therefore, a preload is applied to the lower rolling bearing 13 and the upper rolling bearing 14, whereby it is possible to improve the load capability of the rotating shaft 11 relative against a moment load. Also, it is possible to unitize the rotating shaft 11 having the turbine blade 12 and the lower and upper rolling bearings 13 and 14, and it becomes easy to assemble them in the housing 15 of the dental air turbine 10.

Since the external diameters D1 of the outer rings 21 and 22 are larger than the external diameter D2 of the turbine blade 12, and the outer ring spacer 47 is disposed between the pair of outer rings 21 and 22, it is possible to simplify the configuration of the bearing unit 20 for a dental air turbine.

The other configurations and effects are the same as those of the bearing unit 20 for a dental air turbine according to the fifth embodiment, and thus will not be described.

In FIG. 29A, the external diameters D1 of the outer rings 21 and 22 of the lower and upper rolling bearings 13 and 14 are set to be equal to each other. However, like a first modification shown in FIG. 29B, the outer ring spacer 45 may be formed so as to have substantially L-shaped cross sections, whereby it is possible to apply, as the lower rolling bearing 13, a bearing having an outer ring 21 having an external diameter D3 smaller than the external diameter D1 of the outer ring 22 of the upper rolling bearing 14. That is, at an end portion of the outer ring spacer 45 positioned on the lower rolling bearing 13 side, an inward flange portion 48 is provided. Therefore, the outer ring spacer 45 is disposed between the outer rings 21 and 22 of the lower rolling bearing 13 and the upper rolling bearing 14, and comes into contact with the inner side surfaces 21a and 22a of the inner rings 23 and 24.

At the inner end portion of the inward flange portion 48 of the outer ring spacer 45, a cylindrical portion 49 is formed and is fit into a fitting groove 21g of the outer ring 21 of the lower rolling bearing 13.

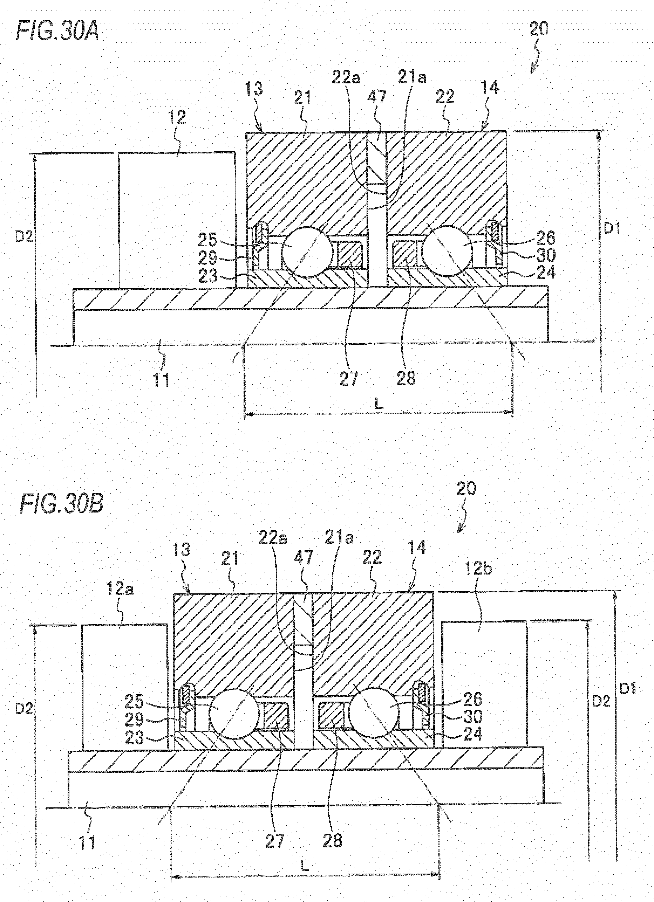

In FIG. 29A, the turbine blade 12 is disposed between the lower rolling bearing 13 and the upper rolling bearing 14. However, the turbine blade may be fixed to a portion of the rotating shaft 11 lower than the lower rolling bearing 13, like a second modification shown in FIG. 30A, or may be fixed to a portion of the rotating shaft 11 higher than the upper rolling bearing 14. Alternatively, like a third modification shown in FIG. 30B, a pair of turbine blades 12a and 12b may be fixed to portions of the rotating shaft 11 positioned on both outer sides of the lower rolling bearing 13 and the upper rolling bearing 14 in the axis direction,

That is, in the bearing unit 20 for a dental air turbine according to any one of the second modification shown in FIG. 30A and the third modification shown in FIG. 30B, an outer ring spacer 47 is interposed between the outer rings 21 and 22, and the inner rings 23 and 24 are fixed to the rotating shaft 11, whereby a preload is applied, whereby the lower rolling bearing 13 and the upper rolling bearing 14 are arranged back-to-back and close to each other.

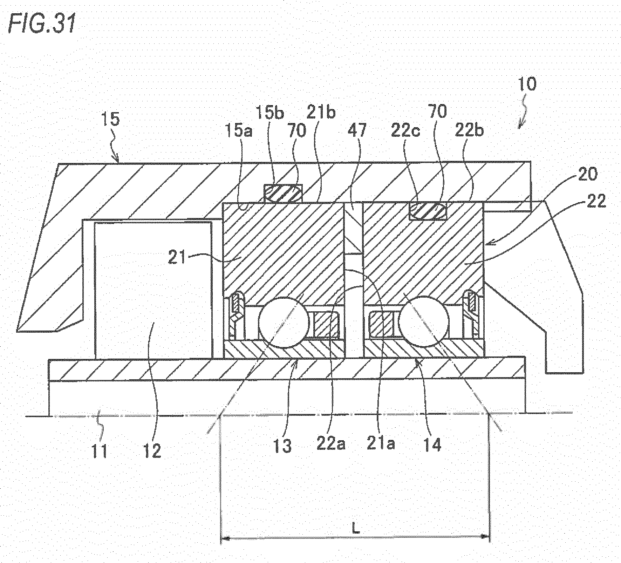

The bearing unit 20 for a dental air turbine having the outer ring spacer according to the seventh embodiment may be assembled in the housing with elastic members interposed therebetween. For example, a bearing unit 20 for a dental air turbine according to a fourth modification shown in FIG. 31 is an example of application to the bearing unit 20 for a dental air turbine shown in FIG. 30A, and an O-ring groove 22c is formed at a position of the outer circumferential surface 22b of the outer ring 22, and an O-ring groove 15b is formed at a position of the inner circumferential surface 15a of the housing 15 corresponding to the outer ring 21. O-rings 70 are installed in the O-ring grooves 22c and 15b, respectively, and the outer rings 21 and 22 are fit in the housing 15.

Although a case where the O-ring grooves 15b and 22c are formed in the inner circumferential surface 15a of the housing 15 and the outer circumferential surface 22b of the outer ring 22, respectively, has been described, the two O-ring grooves may be formed in the inner circumferential surface 15a of the housing 15, or may be provided in the outer circumferential surfaces of the outer rings 21 and 22, respectively.

The configuration of the fourth modification can be applied to the bearing units 20 for dental air turbines according to the first to third modifications.

In the bearing unit 20 for a dental air turbine having the outer ring spacer according to the seventh embodiment, like the fifth embodiment, as long as the lower rolling bearing 13 and the upper rolling bearing 14 arranged back-to-back, they may be configured such that a constant preload is applied thereto. In this case, a spring member abuts on at least one of the facing inner side surfaces 21a and 22a of the outer rings 21 and 22 of the lower rolling bearing 13 and the upper rolling bearing 14 and the outer side surfaces 23a and 24a of the inner rings 23 and 24 in the axis direction.

### (EIGHTH EMBODIMENT)

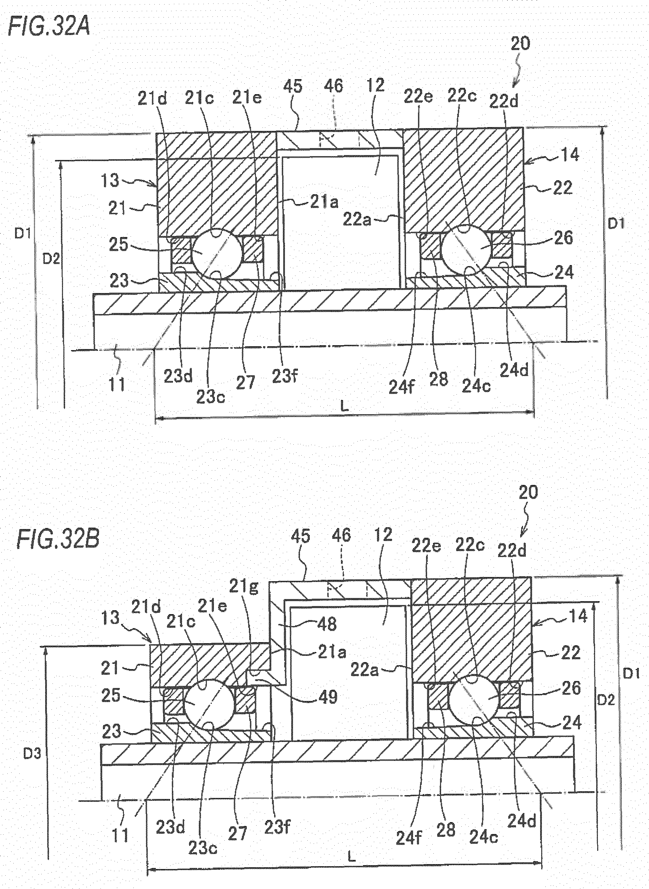

FIG. 32 is a half cross-sectional view of a main portion of a bearing unit for a dental air turbine according to an eighth embodiment. The eighth embodiment is different from the seventh embodiment in the configurations of the lower rolling bearing 13 and the upper rolling bearing 14. Therefore, parts identical to or equivalent to those of the seventh embodiment are denoted by the same reference symbols, and a description thereof will not be made or will be shortly made.

That is, in the eighth embodiment, the lower rolling bearing 13 and the upper rolling bearing 14 are angular ball bearings, and the outer periphery of the inner ring 23 has a shoulder portion 23d formed on one side with respect to the inner ring raceway surface 23c in the axis direction (the outer side in the axis direction), and a counter-bore 23f formed on the other side in the axis direction (the inner side in the axis direction), and the outer periphery of the inner ring 24 has a shoulder portion 24d formed on one side with respect to the inner ring raceway surface 24c in the axis direction (the outer side in the axis direction), and a counter-bore 24f formed on the other side in the axis direction (the inner side in the axis direction). The inner periphery of the outer ring 21 has a pair of shoulder portions 21d and 23e formed on both sides with respect to the outer ring raceway surface 21c in the axis direction, and the inner periphery of the outer ring 22 has a pair of shoulder portions 22d and 22e formed on both sides with respect to the outer ring raceway surface 22c in the axis direction.

That is, according to the bearing unit 20 for a dental air turbine according to the eighth embodiment, the lower rolling bearing 13 and the upper rolling bearing 14 are configured by angular ball bearings, and are arranged back-to-back while interposing the outer ring spacer 45 between the outer rings 21 and 22 and fitting the inner rings 23 and 24 on the rotating shaft 11 such that a preload is applied thereto. Therefore, a preload is applied to the lower rolling bearing 13 and the upper rolling bearing 14, whereby it is possible to improve the load capability of the rotating shaft 11 against a moment load. Also, it is possible to unitize the rotating shaft 11 having the turbine blade 12 and the lower and upper rolling bearings 13 and 14, and it becomes easy to assemble them in the housing 15 of the dental air turbine 10.

Since the external diameters D1 of the outer rings 21 and 22 are larger than the external diameter D2 of the turbine blade 12, and the outer ring spacer 47 is disposed between the pair of outer rings 21 and 22, it is possible to simplify the configuration of the bearing unit 20 for a dental air turbine.

The other configurations and effects are the same as those of the bearing unit 20 for a dental air turbine according to the seventh embodiment, and thus will not be described.

In FIG. 32A, the external diameters D1 of the outer rings 21 and 22 of the lower and upper rolling bearings 13 and 14 are set to be equal to each other. However, like a first modification shown in FIG. 32B, the outer ring spacer 45 may be formed so as to have substantially L-shaped cross sections, whereby it is possible to apply, as the lower rolling bearing 13, a bearing having an outer ring 21 having an external diameter D3 smaller than the external diameter D1 of the outer ring 22 of the upper rolling bearing 14. That is, at an end portion of the outer ring spacer 45 positioned on the lower rolling bearing 13 side, an inward flange portion 48 is provided. Therefore, the outer ring spacer 45 is disposed between the outer rings 21 and 22 of the lower rolling bearing 13 and the upper rolling bearing 14, and comes into contact with the inner side surfaces 21a and 22a of the inner rings 23 and 24.

At the inner end portion of the inward flange portion 48 of the outer ring spacer 45, a cylindrical portion 49 is formed and is fit into a fitting groove 21g of the outer ring 21 of the lower rolling bearing 13.

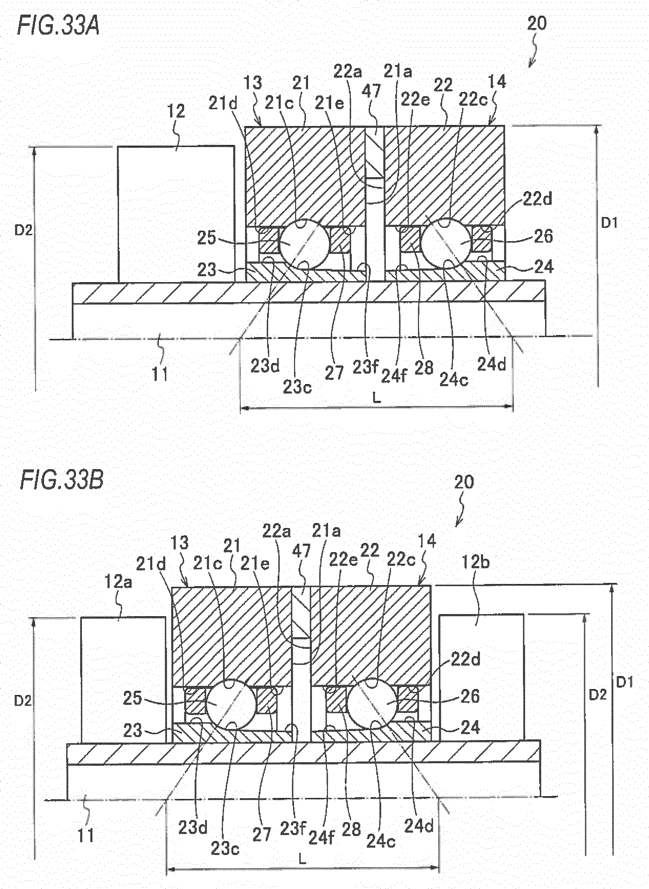

In FIG. 32A, the turbine blade 12 is disposed between the lower rolling bearing 13 and the upper rolling bearing 14, However, the turbine blade may be fixed to a portion of the rotating shaft 11 lower than the lower rolling bearing 13, like a second modification shown in FIG. 33A, or may be fixed to a portion of the rotating shaft 11 higher than the upper rolling bearing 14. Alternatively, like a third modification shown in FIG. 33B, a pair of turbine blades 12a and 12b may be fixed to portions of the rotating shaft 11 positioned on both outer sides of the lower rolling bearing 13 and the upper rolling bearing 14 in the axis direction.

That is, even in the bearing unit 20 for a dental air turbine according to any one of the second modification shown in FIG. 33A and the third modification shown in FIG. 33B, an outer ring spacer 47 is interposed between the outer rings 21 and 22, and the inner rings 23 and 24 are fixed to the rotating shaft 11, whereby a preload is applied, whereby the lower rolling bearing 13 and the upper rolling bearing 14 are arranged back-to-back and close to each other.

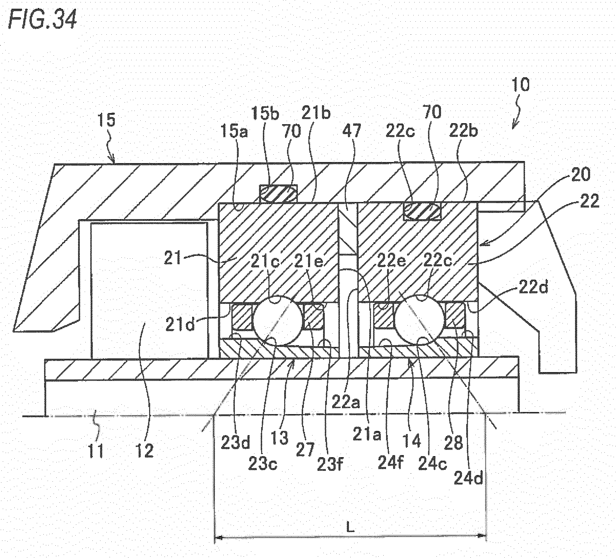

The bearing unit 20 for a dental air turbine having the outer ring spacer according to the eighth embodiment may be assembled in the housing with elastic members interposed therebetween. For example, a bearing unit 20 for a dental air turbine according to a fourth modification shown in FIG. 34 is an example of application to the bearing unit 20 for a dental air turbine shown in FIG. 33A, and an O-ring groove 22c is formed at a position of the outer circumferential surface 22b of the outer ring 22, and an O-ring groove 15b is formed at a position of the inner circumferential surface 15a of the housing 15 corresponding to the outer ring 21. O-rings 70 are installed in the O-ring grooves 22c and 15b, respectively, and the outer rings 21 and 22 are fit in the housing 15.

Although a case where the O-ring grooves 15b and 22c are formed in the inner circumferential surface 15a of the housing 15 and the outer circumferential surface 22b of the outer ring 22, respectively, has been described, the two O-ring grooves may be formed in the inner circumferential surface 15a of the housing 15, or may be provided in the outer circumferential surfaces of the outer rings 21 and 22, respectively.

The configuration of the fourth modification can be applied to the bearing units 20 for dental air turbines according to the first to third modifications.

In the bearing unit 20 for a dental air turbine having the outer ring spacer according to the eighth embodiment, like the seventh embodiment, as long as the lower rolling bearing 13 and the upper rolling bearing 14 arranged back-to-back, they may be configured such that a constant preload is applied thereto. In this case, a spring member abuts on at least one of the facing inner side surfaces 21a and 22a of the outer rings 21 and 22 of the lower rolling bearing 13 and the upper rolling bearing 14 and the outer side surfaces 23a and 24a of the inner rings 23 and 24 in the axis direction.

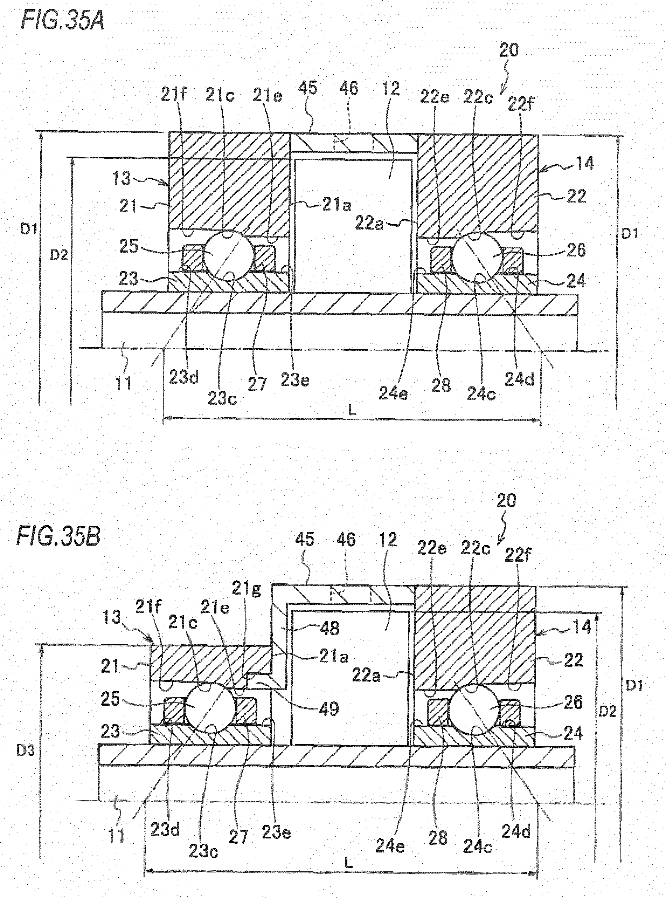

In a bearing unit 20 for a dental air turbine according to a fifth modification shown in FIG. 35A, similarly to the fourth embodiment, the lower rolling bearing 13 and the upper rolling bearing 14 may be configured by the angular ball bearings having counter-bores 21f and 22f formed in the outer rings 21 and 22.

That is, the inner periphery of the outer ring 21 of the lower rolling bearing 13 has the shoulder portion 21e formed on one side with respect to the outer ring raceway surface 21c in the axis direction (the inner side in the axis direction) and the counter-bore 21f formed on the other side in the axis direction (the outer side in the axis direction), and the inner periphery of the outer ring 22 of the upper rolling bearing 14 has the shoulder portion 22e formed on one side with respect to the outer ring raceway surface 22c in the axis direction (the inner side in the axis direction) and the counter-bore 22f formed on the other side in the axis direction (the outer side in the axis direction). Also, the outer peripheries of the inner rings 23 and 24 have the pair of shoulder portions 23d and 23e formed on both sides with respect to the inner ring raceway surface 23c in the axis direction, and the pair of shoulder portions 24d and 24e formed on both sides with respect to the inner ring raceway surface 24c in the axis direction, respectively.

Also, like a sixth modification shown in FIG. 35B, the outer ring spacer 45 may be formed so as to have substantially L-shaped cross sections, whereby it is possible to apply, as the lower rolling bearing 13, a bearing including an outer ring 21 having an external diameter D3 smaller than the external diameter D1 of the outer ring 22 of the upper rolling bearing 14. That is, at an end portion of the outer ring spacer 45 positioned on the lower rolling bearing 13 side, an inward flange portion 48 is provided. Therefore, the outer ring spacer 45 is disposed between the outer rings 21 and 22 of the lower rolling bearing 13 and the upper rolling bearing 14 and comes into contact with the inner side surfaces 21a and 22a of the inner rings 23 and 24.

At the inner end portion of the inward flange portion 48 of the outer ring spacer 45, a cylindrical portion 49 is formed and is fit into a fitting groove 21g of the outer ring 21 of the lower rolling bearing 13.

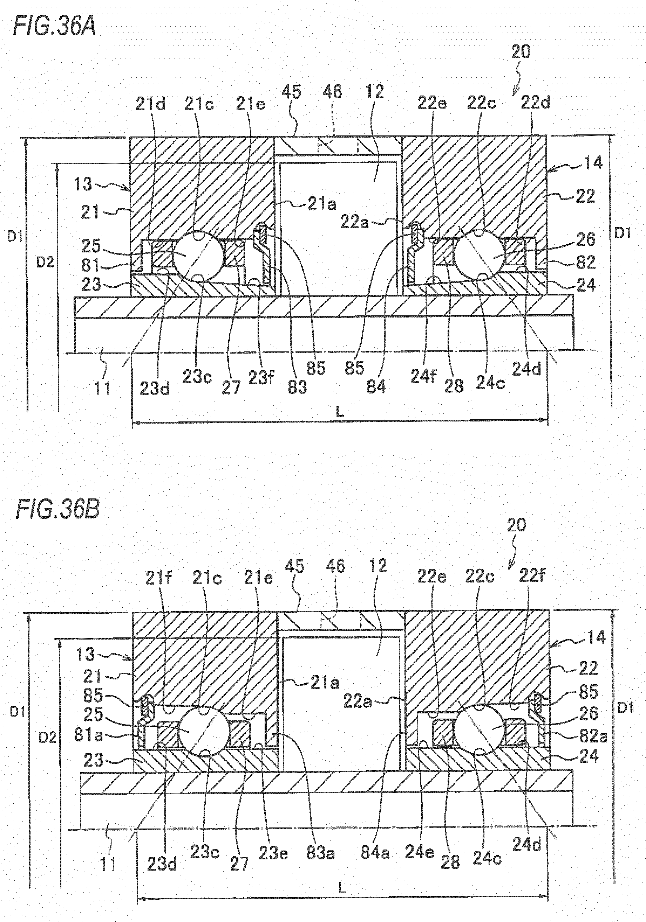

Moreover, in bearing units 20 for dental air turbines according to seventh and eighth modifications shown in FIGS. 36A and 36B, similarly to the third embodiment, the lower rolling bearing 13 includes sealing means 81 and 83 (81a and 83a) provided on the outer ring 21 on both sides in the axis direction so as to face the outer periphery of the inner ring 23, and has a labyrinth structure between the sealing means 81 and 83 (81a and 83a) and the inner ring 23, and the upper rolling bearing 14 includes sealing means 82 and 84 (82a and 84a) provided on the outer ring 22 on both sides in the axis direction so as to face the outer periphery of the inner ring 24, and has a labyrinth structure between the sealing means 82 and 84 (82a and 84a) and the inner ring 24.

Specifically, in the seventh modification shown in FIG. 36A, the sealing means 81, 82, 83, and 84 include sealing portions 81 and 82 formed integrally with the outer rings 21 and 22 on the outer sides in the axis direction so as to extend from the shoulder portions 21d and 22d of the outer rings 21 and 22 toward the inner rings 23 and 24 in the radial directions, and sealing members 83 and 84 disposed in seal grooves formed in the shoulder portions 21e and 22e of the outer rings 21 and 22 on the inner sides in the axis direction by use of retaining rings 85.

The sealing members 83 and 84 provided on the inner sides in the axis direction and the sealing portions 81 and 82 provided on the outer sides in the axis direction may be inversely configured.

In the eighth modification shown in FIG. 36B, the sealing means 81a, 82a, 83a, and 84a include sealing members 81a and 82a disposed in seal grooves formed in the counter-bores 21f and 22f of the outer rings 21 and 22 on the outer sides in the axis direction by use of retaining rings 85, and sealing portions 83a and 84a formed integrally with the outer rings 21 and 22 on the inner sides in the axis direction so as to extend from the shoulder portions 21e and 22e of the outer rings 21 and 22 toward the inner rings 23 and 24 in the radial directions.

In the seventh and eighth modifications, labyrinth structures may be provided only on the outer sides in the axis direction by the sealing means 81 and 82 (81a and 82a) provided on the outer sides in the axis direction and the outer peripheries of the inner rings 23 and 24, without providing the sealing means 83 and 84 (83a and 84a) on the inner sides in the axis direction.

It is noted that the present invention is not limited to each embodiment described above, and modifications, improvements, and the like can be made properly.

For example, in the rolling bearings, the types and arrangements of the cages and the sealing members may be appropriately changed.

Further, the present invention is not limited to each embodiment described above, and modifications, improvements, and the like can be made properly.

More specifically, as the ball bearings which configure the rolling bearings, as described above, angular ball bearings having counter-bores in their outer rings or their inner rings may be used, or deep groove rolling bearings having no counter-bores may be used. Also, the types and arrangements of the cages and the sealing members may be appropriately changed.

This application is based on Japanese Patent Application No. 2013-196875, filed on September 24, 2013, and Japanese Patent Application No. 2014-034542, filed on February 25, 2014, and Japanese Patent Application No. 2014-182122, filed on September 8, 2014; and the entire contents of which are incorporated herein by reference.

### Description of Reference Numerals

10: dental air turbine
11: rotating shaft
12, 12a, 12b: turbine blade
13: lower rolling bearing (rolling bearing)
14: upper rolling bearing (rolling bearing)
15: housing
20: bearing unit for dental air turbine
21, 22: outer ring
21a, 22a: inner side surface
21 b, 22b: outer circumferential surface
23, 24: inner ring
21f, 22f, 23f, 24f: counter-bore
32, 34: rib (step portion)
35: spring member
41, 51, 55, 61: sleeve (space member)
41a: outer circumferential surface
42, 52, 56, 65, 66: step portion
43, 46, 53, 57a, 57b, 67: air supply hole portion
44: exhaust hole portion
45,47: outer ring spacer (space member)
70: O-ring (elastic member)
81, 82, 81a, 82a: sealing portion (sealing means)
83, 84, 83a, 84a: sealing member (sealing means)
D1, D3: external diameter of outer ring
D2: external diameter of turbine blade

## Claims

1. A dental air turbine comprising:
a turbine blade;
a rotating shaft which is integrally fixed with the turbine blade and includes one end to which a dental treatment instrument can be attached; and
a pair of rolling bearings which support the rotating shaft rotatably with respect to a housing,
wherein the pair of rolling bearings are arranged back-to-back while fitting inner rings of the pair of rolling bearings on the rotating shaft such that a preload is applied thereto.

2. The dental air turbine according to claim I,
wherein facing side surfaces of outer rings of the pair of rolling bearings come into contact with a step portion provided on the housing, and
wherein the inner rings of the pair of rolling bearings are fit on the rotating shaft to be fixed thereto such that a fixed position preload is applied.

3. The dental air turbine according to claim 1,
wherein a spring member abuts on at least one of facing side surfaces of outer rings of the pair of rolling bearings and outer side surfaces of the inner rings in an axis direction such that a constant preload is applied to the pair of rolling bearings.

4. The dental air turbine according to claim 3,
wherein the spring member is disposed between each of the facing side surfaces of the outer rings of the pair of the rolling bearings and a step portion provided on the housing, and
wherein the inner rings of the pair of rolling bearings are fit on the rotating shaft to be fixed thereto such that a constant preload is applied.

5. The dental air turbine according to claim 3,
wherein each of the facing side surfaces of the outer rings of the pair of rolling bearings comes into contact with a step portion provided on the housing, and
wherein the inner rings of the pair of rolling bearings are fit on the rotating shaft in a state where the spring member is interposed between each of the outer side surfaces of the inner rings in the axis direction and a fixing ring fixed to the rotating shaft, such that a constant preload is applied.

6. The dental air turbine according to claim 1,
wherein each of the pair of rolling bearings is an angular ball bearing which includes an outer ring having an outer ring raceway surface formed at an inner periphery thereof, an inner ring having an inner ring raceway surface formed at an outer periphery thereof, and a plurality of balls assembled with a contact angle with the outer ring raceway surface and the inner ring raceway surface.

7. The dental air turbine according to claim 6,
wherein one of the inner periphery of the outer ring and the outer periphery of the inner ring of each of the pair of rolling bearings has a shoulder portion formed on one side with respect to the raceway surface in an axis direction, and a counter-bore formed on the other side in the axis direction,
wherein the other of the inner periphery of the outer ring and the outer periphery of the inner ring of each of the pair of rolling bearings has a pair of shoulder portions formed on both sides with respect to the raceway surface in the axis direction, and
wherein each of the pair of rolling bearings has a labyrinth structure between sealing means provided on the outer ring so as to face the outer periphery of the inner ring and the outer periphery of the inner ring at least on an outer side in the axis direction.

8. The dental air turbine according to claim 7,
wherein in each of the pair of rolling bearings, the sealing means is configured by a sealing portion which is formed integrally with the outer ring and extends from the shoulder portion of the outer ring toward the inner rings in a radial direction.

9. A bearing unit for a dental air turbine, the bearing unit comprising:
a turbine blade;
a rotating shaft which is integrally fixed with the turbine blade and includes one end to which a dental treatment instrument can be attached; and
a pair of rolling bearings which support the rotating shaft rotatably with respect to a housing,
wherein the pair of rolling bearings are arranged back-to-back while disposing a space member between outer rings of the pair of rolling bearings and fitting inner rings on the rotating shaft such that a preload is applied thereto.

10. The bearing unit for a dental air turbine according to claim 9,
wherein facing side surfaces of the outer rings of the pair of rolling bearings come into contact with side surfaces of the space member in an axis direction, respectively, and
wherein the inner rings of the pair of rolling bearings are fit on the rotating shaft to be fixed thereto such that a fixed position preload is applied.

11. The bearing unit for a dental air turbine according to claim 10,
wherein a spring member abuts on at least one of facing side surfaces of the outer rings of the pair of rolling bearings and outer side surfaces of the inner rings in an axis direction such that a constant preload is applied.

12. The bearing unit for a dental air turbine according to claim 11,
wherein the spring member is disposed between each of the facing side surfaces of the outer rings of the pair of the rolling bearings and a corresponding one of the side surfaces of the space member in the axis direction, and
wherein the inner rings of the pair of rolling bearings are fit on the rotating shaft to be fixed thereto such that a constant preload is applied.

13. The bearing unit for a dental air turbine according to claim 11,
wherein each of the facing side surfaces of the outer rings of the pair of rolling bearings comes into contact with a corresponding one of the side surfaces of the space member in the axis direction, and
wherein the inner rings of the pair of rolling bearings are fit on the rotating shaft in a state where the spring member is interposed between each of the outer side surfaces of the inner rings in the axis direction and a fixing ring fixed to the rotating shaft, such that a constant preload is applied.

14. The bearing unit for a dental air turbine according to any one of claims 9 to 13,
wherein an external diameter of at least one of the outer rings is larger than an external diameter of the turbine blade, and
wherein the space member is a sleeve which is fixed to the housing and includes an air supply hole portion for supplying air to the turbine blade, an exhaust hole portion for discharging air, and a step portion which is provided on an inner side thereof in a radial direction so as to face side surfaces of the outer rings.

15. The bearing unit for a dental air turbine according to any one of claims 9 to 13,
wherein the turbine blade is disposed on an outer side of the pair of rolling bearings in an axis direction,
wherein external diameters of the outer rings of the pair of rolling bearings are smaller than an external diameter of the turbine blade, and
wherein the space member is a sleeve which is fixed to the housing and includes an air supply hole portion for supplying air to the turbine blade, an exhaust hole portion for discharging air, and a step portion which is provided on an inner side thereof in a radial direction so as to face side surfaces of the outer rings.

16. The bearing unit for a dental air turbine according to any one of claims 9 to 13,
wherein an external diameter of at least one of the outer rings is larger than an external diameter of the turbine blade, and
wherein the space member is an outer ring spacer which includes an air supply hole portion for supplying air to the turbine blade and an exhaust hole portion for discharging air and which is disposed between the pair of rolling bearings.

17. The bearing unit for a dental air turbine according to claim 9,
wherein each of the pair of rolling bearings is an angular ball bearing which includes an outer ring having an outer ring raceway surface formed at an inner periphery thereof, an inner ring having an inner ring raceway surface formed at an outer periphery thereof, and a plurality of balls assembled with a contact angle with the outer ring raceway surface and the inner ring raceway surface.

18. The bearing unit for a dental air turbine according to claim 17,
wherein one of the inner periphery of the outer ring and the outer periphery of the inner ring of each of the pair of rolling bearings has a shoulder portion formed on one side with respect to the raceway surface in an axis direction, and a counter-bore formed on the other side in the axis direction,
wherein the other of the inner periphery of the outer ring and the outer periphery of the inner ring of each of the pair of rolling bearings has a pair of shoulder portions formed on both sides with respect to the raceway surface in the axis direction, and
wherein each of the pair of rolling bearings has a labyrinth structure between sealing means provided on the outer ring so as to face the outer periphery of the inner ring and the outer periphery of the inner ring at least on an outer side in the axis direction.

19. The bearing unit for a dental air turbine according to claim 18,
wherein in each of the pair of rolling bearings, the sealing means is configured by a sealing portion which is formed integrally with the outer ring and extends from the shoulder portion of the outer ring toward the inner rings in a radial direction.

20. A dental air turbine comprising:
the bearing unit according to any one of claims 9 to 19,
wherein the bearing unit is fixed to the housing with an elastic member interposed therebetween,
which is disposed on an outer periphery of the space member or an outer periphery of the outer rings.
